# EUROPEAN PATENT APPLICATION

(11) **EP 2 290 517 A1**
(43) Date of publication of application: **02.03.2011**
(21) Application number: 09762577.6
(22) Date of filing: 11.06.2009
(51) Int. Cl.: G06F 3/048

(54) **INFORMATION PROCESSING DEVICE, INFORMATION PROCESSING METHOD, AND INFORMATION PROCESSING CONTROL PROGRAM**

(30) Priority: 13.06.2008 JP 2008155230
(71) Applicant: NEC Corporation, Minato-ku Tokyo 108-8001 (JP)
(72) Inventor: TANAKA, Hideaki, Tokyo 108-8001 (JP)
(74) Representative: Vossius & Partner
(86) International application number: PCT/JP2009/061069
(87) International publication number: WO 2009/151151

(57) **Abstract**

In an information processing apparatus having a plurality of functions, an information processing apparatus which is capable of executing an appropriate process to an operation by user according to the function under execution is provided.

An information processing apparatus according to the present invention is an information processing apparatus having a plurality of application functions, **characterized by** comprising:
an input means to accept input from the user;
a storage means for holding a table, to which processing information was registered by correlating to combinations of applications;
a display means which displays at least two windows;
a control means which displays the first window and the second window for the second application to the display means in the case when the input means accepts input for starting the second application while the first window for the first application is displayed on the display means; and
a processing means for processing based on the processing information corresponding to combination of the first application and the second application in the case when the input means accepts input for the first window and the second window respectively while the first window and the second window are displayed on the display means.

## Description

### [TECHNICAL FIELD]

The present invention relates to an information processing apparatus such as a mobile phone, a PHS, a PDA or a small size personal computer, a information processing method and an information processing control program and, in particular, to an information processing apparatus with a plurality of functions and a display for displaying regarding the functions, information processing method and information processing control program.

### [BACKGROUND ART]

An information processing apparatus such as a mobile phone, a PHS (Personal Handy-phone System), a PDA (Personal Digital Assistants) or a small personal computer is widely used. An upsizing of a display is expanding in these information processing apparatus. With an upsizing of a display, an information processing apparatus, to which a touch panel is arranged on a display and used for controlling the information processing apparatus for example, has been increasing.

It is disclosed in the Japanese Patent Application Laid-Open No. 2005-301647 (hereinafter, referred to as related art 1) that an information processing apparatus which has a touch panel on a display and an address book function and a mail creation function are operated by using the touch panel. The Japanese Patent Application Laid-Open No. 2007-012044 (hereinafter, referred to as related art 2) also discloses a report preparing device for medical purposes in which text and image information displayed on the display are linked by using a touch panel on the display The Japanese Patent Application Laid-Open No. 2007-122153 (hereinafter, referred to as related art 3) further discloses a text editing device which masks out of the text displayed on the display when the text is dragged.

### [DISCLOSURE OF THE INVENTION]

### [PROBLEM TO BE SOLVED BY THE INVENTION]

A sophistication of an apparatus is also evolving with an upsizing of a display in these information processing apparatus in the meantime. A processing content to the same operation by a user will be differed depending on the type of functions being performed when an information processing apparatus has a plurality of functions. A processing content cannot be changed accordingly depending on the type of functions being performed in the related art 1 to 3 above-mentioned. It is desirable that an information processing apparatus performs an appropriate operation, to an operation by a user, by distinguishing an appropriate processing content depending on the type of functions being performed in an information processing apparatus with a plurality of functions. The present invention was accomplished in view of the problem mentioned above and it is therefore an object of the present invention to provide an information processing apparatus capable of performing an appropriate processing to a user operation depending on the type of functions being performed, an information processing method and an information processing control program in an information processing apparatus with a plurality of functions.

### [MEANS FOR SOLVING THE PROBLEM]

In order to achieve the above-mentioned object, an information processing apparatus of the present invention having a plurality of application functions includes an input means to accept input from a user, a storage means for holding a table to which processing information was registered by correlating to combinations of applications, a display means which displays at least two windows, a control means which displays the first window and the second window for the second application to the display means in the case when the input means accepts input for starting the second application while the first window for the first application is displayed on the display means and a processing means for processing based on the processing information corresponding to combination of the first application and the second application in the case when the input means accepts input for the first window and the second window respectively while the first window and the second window are displayed on the display means.

In order to achieve the above-mentioned object, an information processing method of the present invention which is using an information processing apparatus having a display means and a memory in which processing information was registered by correlating to combinations of applications includes a step for displaying the first window and the second window for the second application to the display means in the case when accepting input for starting the second application while the first window for the first application is displayed on the display means and a step for processing based on the processing information corresponding to combination of the first application and the second application in the case when accepting input for the first window and the second window respectively while the first window and the second window are displayed on the display means.

In order to achieve the above-mentioned object, a control program of the present invention for executed by a computer of an information processing apparatus which has a display means and a memory in which processing information was registered by correlating to combinations of applications includes a procedure for displaying the first window and the second window for the second application to the display means in the case when accepting input for starting the second application while the first window for the first application is displayed on the display means and a procedure for processing based on the processing information corresponding to combination of the first application and the second application in the case when accepting input for the first window and the second window respectively while the first window and the second window are displayed on the display means.

### [THE EFFECT OF THE INVENTION]

According to the present invention, an information processing apparatus has a storage means for holding a table, to which processing information was registered by correlating to combinations of applications. An information processing apparatus processes an input from the user based on the table. Accordingly, an information processing apparatus capable of processing an appropriate operation to the user operation depending on the type of functions being performed, an information processing method and an information processing control program can be provided.

### [BRIEF DESCRIPTION OF DRAWINGS]

The purpose mentioned above and the other purposes, and the feature and an advantage will be made more clearly by the preferred embodiment described hereafter and the attached drawings which are shown below.
FIG. 1 is a plan view of a mobile phone 100 according to the first embodiment of the present invention.
FIG.2 is a block diagram showing a circuit configuration of the mobile phone 100 according to the first embodiment.
FIG.3 is a flow chart showing a creation process of an e-mail according to the first embodiment.
FIG.4 is a plan view of a display showing a display screen image when a mail creation mode is selected in the first embodiment.
FIG.5 is a plan view of a display showing a mail creation window and a telephone directory window in the first embodiment.
FIG.6 is a flow chart showing a determination processing of the address range shown in the step S206 specifically.
FIG. 7 is a plan view showing an appearance when the address designated by a user is highlighted on the screen image in the first embodiment.
FIG. 8 is a flow chart showing an appearance of an address designation processing in the first embodiment.
FIG. 9 is a plan view of a display showing an example in which a user defines an address in the first embodiment.
FIG. 10 is a plan view of a display showing a state where an e-mail address is pasted in address field in the first embodiment.
FIG. 11 is a plan view showing an appearance when the address designated by a user using a pointing device is highlighted on the screen image in the first embodiment.
FIG. 12 is a plan view of a display showing an example for designating an address using a pointing device in the first embodiment.
FIG. 13 is a block diagram outlining a circuit configuration of a mobile phone 100A relating to the second embodiment of the present invention.
FIG. 14 is a plan view of a display showing a state in which a home page of the internet is indicated in the second embodiment.
FIG. 15 is a flow chart showing an appearance of a display processing of each window when an application software-accompanying window is invoked in the second embodiment.
FIG. 16 is a plan view of a display to which the second window is additionally displayed in the second embodiment.
FIG. 17 is a plan view showing a state in which two windows are displayed on a display in parallel in the second embodiment.
FIG. 18 is a plan view showing a state in which a main body of an e-mail is input in the second embodiment.
FIG. 19 is a flow chart showing a process for gobbling down an URL of contents displayed in a window for a browser in the second embodiment.
FIG. 20 is plan view of a display showing a process for pasting an URL of a home page to a main body of an e-mail in the second embodiment.
FIG. 21 is a plan view of a display showing a state in which an URL is pasted to window for a mail processing in the second embodiment.
FIG. 22 is a flow chart showing an appearance of a process for switching gobbling down of an URL by a gesture in a variation of the second embodiment.
FIG. 23 is a block diagram outlining a circuit configuration of a mobile phone 100B in the third embodiment of the present invention.
FIG. 24 is a plan view of a display showing an initial step for pasting program identification information of a desired channel of a television into an e-mail in the third embodiment.
FIG. 25 is a plan view of a display showing the next step for pasting program identification information of a desired channel of a television into an e-mail in the third embodiment.
FIG. 26 is a plan view of a display showing the step after pasting program identification information of a desired channel of a television into an e-mail in the third embodiment.
FIG. 27 is a block diagram of a circuit configuration of a mobile phone C in the fourth embodiment of the present invention.
FIG. 28 is a flow chart showing a multi-display processing of a display during a main body creation of an e-mail in the fourth embodiment.
FIG. 29 is a plan view of a display showing the first step of pasting one of decoration images to a predetermined position of a mail main body in the fourth embodiment.
FIG. 30 is a plan view of a display showing the second step of pasting one of decoration images to a predetermined position of a mail main body in the fourth embodiment.
FIG. 31 is a plan view of a display showing the third step of pasting one of decoration images to a predetermined position of a mail main body in the fourth embodiment.
FIG. 32 is a plan view of a display showing the first step of pasting one of decoration plates to a predetermined position of a mail main body in the fourth embodiment.
FIG. 33 is a plan view of a display showing the second step of pasting one of decoration plates to a predetermined position of a mail main body in the fourth embodiment.
FIG. 34 is a plan view of a display showing the third step of pasting one of decoration plates to a predetermined position of a mail main body in the fourth embodiment.
FIG. 35 is a plan view of a display showing the first step of an operation by using a decoration palette in the fourth embodiment.
FIG 36 is a plan view of a display showing the second step of an operation by using a decoration palette in the fourth embodiment.
FIG. 37 is a plan view of a display showing the third step of an operation by using a decoration palette in the fourth embodiment.
FIG. 38 is a plan view of a display showing the first step of a processing to register a telephone directory by using a received mail in the fifth embodiment.
FIG. 39 is a plan view of a display showing the second step of a processing to register a telephone directory by using a received mail in the fifth embodiment.
FIG. 40 is a plan view of a display showing the third step of a processing to register a telephone directory by using a received mail in the fifth embodiment.
FIG. 41 is a plan view of a display showing the fourth step of a processing to register a telephone directory by using a received mail in the fifth embodiment.
FIG. 42 is a plan view of a display showing the fifth step of a processing to register a telephone directory by using a received mail in the fifth embodiment.
FIG.43 is a plan view of a display showing the sixth step of a processing to register a telephone directory by using a received mail in the fifth embodiment.
FIG. 44 is a block diagram outlining a circuit configuration of an information processing apparatus 500 relating to the sixth embodiment.
FIG. 45 shows an example of a table of the information processing apparatus 500 according to the sixth embodiment.
FIG. 46 is a plan view showing an example of other information processing apparatus 700.

### [REFERENCE SIGNS LIST]

- 100,100A, 100B, 100C: MOBILE PHONE
- 105: DISPLAY
- 108: OPERATION KEY UNIT
- 110: POINTING DEVICE
- 121: CPU
- 122, 122A, 122B, 122C: MEMORY
- 123, 123A, 123B, 123C: MAIN CONTROL UNIT
- 125: COORDINATE DETECTING UNIT
- 126: TOUCH PANEL
- 127: GESTURE ANALYSIS UNIT
- 131: APPLICATION PROGRAM STORING UNIT
- 132: APPLICATION MULTI-INVOKING MANAGEMENT UNIT
- 133: DESIGNATION POSITION DISCRIMINATING UNIT FOR EACH APPLICATION
- 134: TELEPHONE DIRECTORY DATA STORAGE UNIT
- 135: TELEVISION RECEIVING UNIT
- 136: MAIL DECORATION UNIT
- 141: MAIL CREATION WINDOW
- 142: TELEPHONE DIRECTORY WINDOW
- 151: FINGERTIP
- 161, 602: CURSOR
- 301: BROWSER WINDOW
- 302: MAIL PROCESSING WINDOW
- 303: TELEVISION WINDOW
- 304, 305, 306: DECORATION WINDOW
- 307: TELEPHONE DIRECTORY REGISTRATION WINDOW
- 500, 700: INFORMATION PROCESSING APPARATUS
- 501: INPUT MEANS
- 502: STORAGE MEANS
- 503: DISPLAY MEANS
- 504: PROCESSING MEANS
- 505: CONTROL MEANS
- 506: TABLE
- 701: INPUT PAD

### [BEST MODE FOR CARRYING OUT THE INVENTION]

The present invention will be described with exemplary embodiments.

### [THE FIRST EXEMPLARY EMBODIMENT]

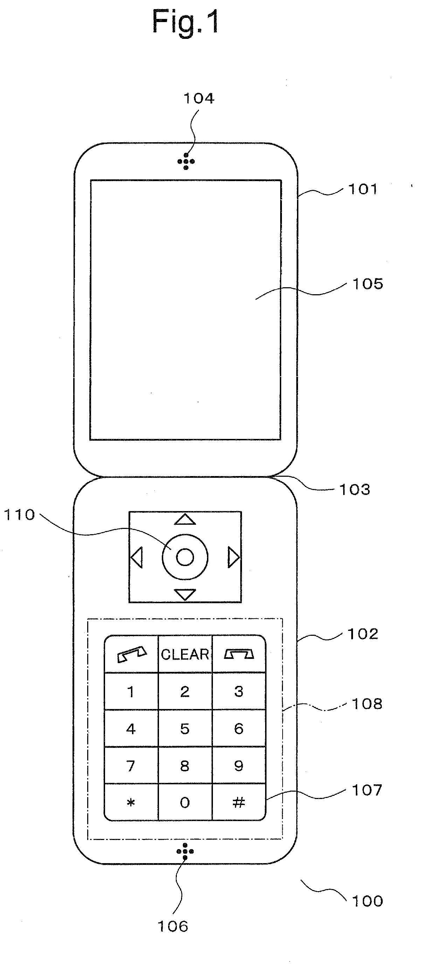

A plan view of a mobile phone 100 as an information processing apparatus according to the first exemplary embodiment of the present invention is shown in FIG. 1. The first housing 101 and the second housing 102 are connected with a hinge mechanism 103 so as to open and close freely in the mobile phone 100 of this embodiment.

A speaker 104 and a display 105 such as a liquid crystal display or an organic EL display (electroluminescence display) are arranged on an inner grabbing side for opening and closing of the first housing 101 in FIG. 1. On the other hand, a microphone 106 is arranged on an inner grabbing side for opening and closing of the second housing 102 which is the position opposing to the speaker 104 when the mobile phone 100 is closed. An operation key unit 108, in which a plurality of keys 107 were arranged, and a pointing device 110 are further arranged on an inner grabbing side for opening and closing of the second housing 102. The pointing device 110 is an input device having a cross key which displays four directions of the left, right, up or down and a push button which moves a cursor to the direction a convexity is tilted. A biaxial rotation mechanism is adopted for the hinge mechanism 103 in the embodiment. The first housing 101 can be rotated so that the display 105 may be an obverse side when folded with the hinge mechanism 103.

The first housing 101 also can be rotated 90-degree to the second housing 102 while in the state that the first housing 101 opened 180-degree to the second housing 102 by the hinge mechanism 103. In the case above-mentioned, a user can see contents such as a television program and a home page holding the display 105 with landscape-oriented arrangement. It is also possible to use the display 105 with landscape-oriented arrangement by rotating the mobile phone 100 itself 90-degree.

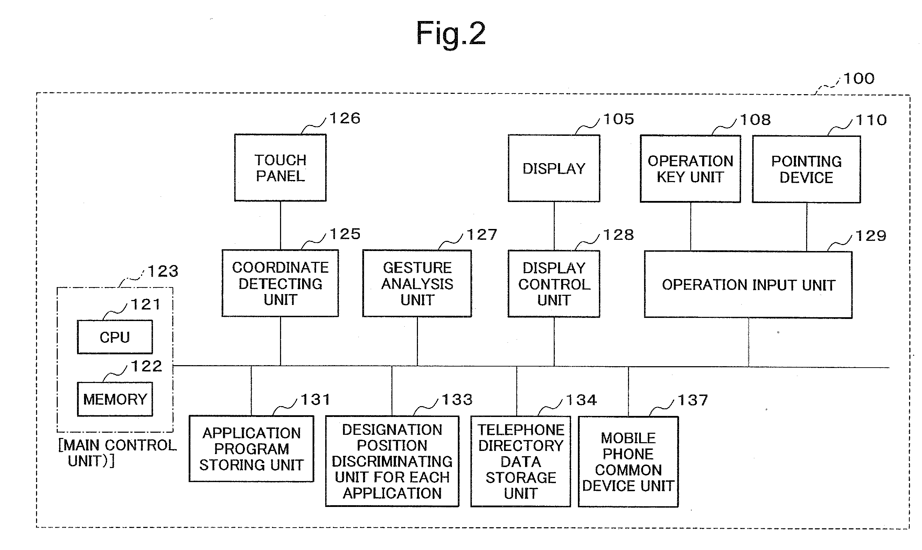

FIG.2 is a block diagram showing a circuit configuration of the mobile phone 100 according to the embodiment. The mobile phone 100 has a main control unit 123 comprising a CPU (Central Processing Unit) 121 and a memory 122 such as ROM (Read Only Memory) which stores a control program which the CPU 121 executes in FIG. 2. The main control unit 123 controls each part in this mobile phone 100. Each part will be described.

A touch panel 126 is arranged on the display 105 shown in FIG. 1. A coordinate detecting unit 125 detects the coordinate value of a pressed position when the touch panel 126 is pressed. A gesture analysis unit 127 analyzes whether a user performed a predetermined gesture on the touch panel 126. For example, when the user draws the character such as "M" on the touch panel 126, the gesture analysis unit 127 analyzes the input, and determines that the user performed predetermined input. A display control unit 128 displays a display object on the display 105. The display control unit 128 further controls the display density and background color of the display 105. An operation input unit 129 accepts input to an input device such as the operation key unit 108 and the pointing device 110 by the user.

An application program storing unit 131 stores various application programs or the mobile phone 100. For example, a telephone directory application program for opening a telephone directory, an electronic mail application program for creation of an electronic mail and transmitting, and a browsing application program for the internet browsing or the like are stored. In this embodiment, a table for controlling operation of a designation position discriminating unit for each application 133 is stored in the application program storing unit 131. An operation substance of designation position discriminating unit for each application 133 is registered in the table as processing information correlated to an application program. The user can change the set contents in a table accordingly in accordance with addition of application and elimination or the like with the table.

The designation position discriminating unit for each application 133 executes various operations based on processing information registered in the table. Operations of the designation position discriminating unit for each application 133 will be described later.

A telephone directory data storage unit 134 stores data such as the telephone number and an e-mail address. These data are used at the time reading the telephone directory and creating an e-mail. Each data is stored with separation by break and linefeed, and a blank (space) in the telephone directory data storage unit 134.

A mobile phone common device unit 137 is a device which the mobile phone 100 generally has. Specifically, a device such as a wireless communication control circuit for wireless communication, the speaker 104, the microphone 106, and a digital camera and a like for the mobile phone 100 are included.

The coordinate detecting unit 125 and the operation input unit 129 are examples of an input means of the claim. The application program storing unit 131 is also an example of a storage means for storing a table.

The designation position discriminating unit for each application 133 is an example of a processing means.

There is not any need to compose the above-mentioned parts with dedicated hardware. At least a part of the above-mentioned can be realized based on software.

An example of operation of the main control unit 123 and the designation position discriminating unit for each application 133 will be described specifically in the following. A case, in that the user creates an e-mail using the telephone directory data while holding the display 105 with landscape-oriented arrangement, will be described hereinafter.

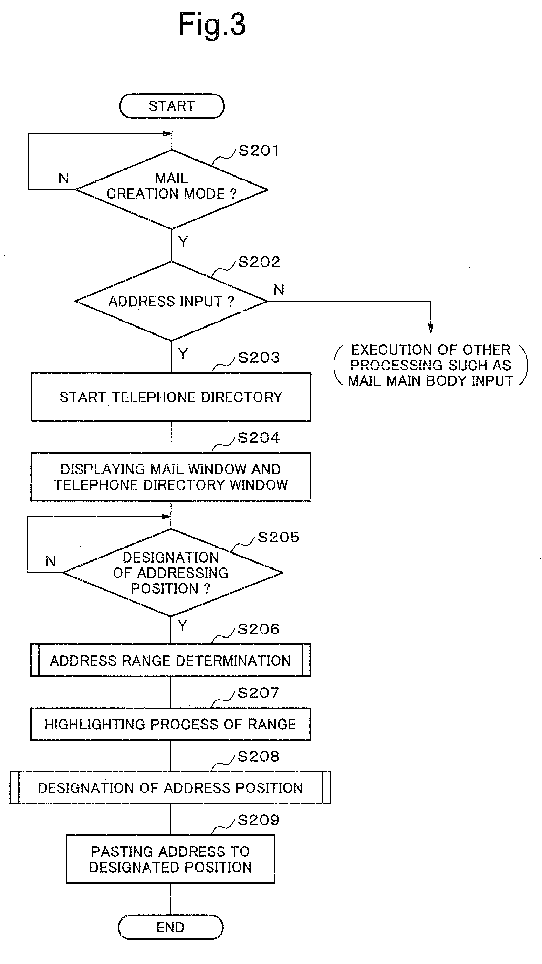

FIG.3 is a flow chart showing a creation processing of an e-mail. First, the user presses a mail button in the operation input unit 129 and starts an electronic mail application program. A menu screen about a mail is displayed by this operation on the display 105. The user designates a mail creation mode from a menu screen (step S201: Y).

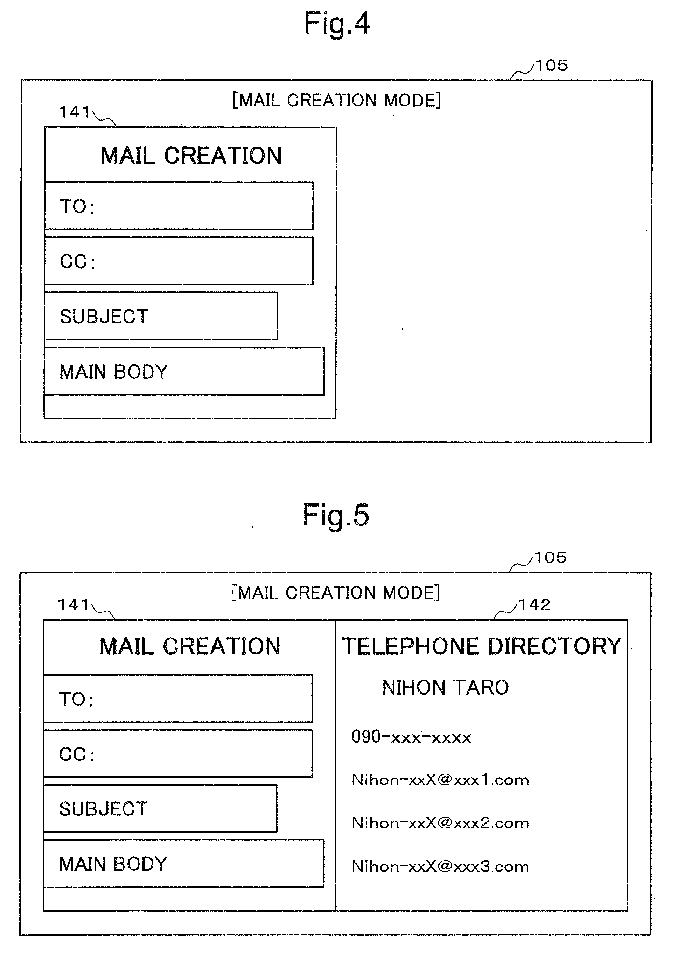

FIG. 4 is an example of the display 105 when a mail creation mode is designated. A mail creation window 141 is displayed on the display 105 as the first window in FIG. 4. A "TO" field as an address of an e-mail, a "CC (Carbon Copy)" field, a subject field and a main body input column are shown in the mail creation window 141. The user can adjust the size of the mail creation window 141 accordingly in the display 105 as well.

The user presses a desired column in the mail creation window 141 using a fingertip or a stylus or the like using the touch panel 126 arranged on the display 105 under the above-mentioned condition. The coordinate detecting unit 125 detects the operation of the user and calculates a coordinate of the position that the user pressed.

When a calculated coordinate is in the field about an address such as a "TO" field and a "CC" field, the main control unit 123 determines that address input was performed (step S202: Y). The main control unit 123 performs usual mail creation processing meanwhile, when it is determined that "the subject" or "main body" was pressed (step S202:N).

The main control unit 123 starts a telephone directory application program (Step S203) and displays a window for reading a telephone directory on the display 105 as the second window (Step S204) when it is determined that a field about an address was designated. The state, in that both the mail creation window 141 as the first window and a telephone directory window 142 as the second window were displayed in parallel on the display 105, is shown in FIG. 5. The user can replace the position of the mail creation window 141 and the telephone directory window 142, and change the display magnification of each window.

The coordinate detecting unit 125 calculates a coordinate of the position which is pressed down by the user (Step S205), when the user presses down a desired address by a fingertip or a stylus from an e-mail address displayed on the telephone directory window 142, during the state shown in FIG 5. The main control unit 123 starts the designation position discriminating unit for each application 133, when a calculated coordinate is in the display range of the e-mail address. The designation position discriminating unit for each application 133 determines an e-mail address, a calculated coordinate of which is in the display range, as address information (Step S206). In another words, the user can designate desired address information without designating the starting and the ending position of the displayed e-mail address.

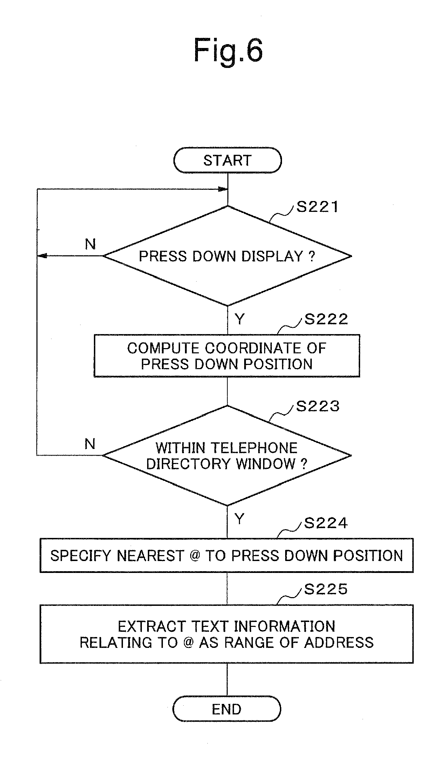

It is an adjunct to the determination method of address information with FIG. 6. FIG.6 is a flow chart showing a determination processing of the address range in the step S205 and the step S206 of FIG. 3 in detail. The coordinate detecting unit 125 calculates a coordinate in the position pressed down (Step S222) when push down by the user is detected (step S221: Y) in FIG. 6. The main control unit 123 performs usual mail creation processing if the position of the coordinate is not in the telephone directory window 142 (step S223: N). On the other hand, the designation position discriminating unit for each application 133 is started when it is in the telephone directory window 142 (step S223:Y). The designation position discriminating unit for each application 133 specifies "@ (at sign)" closest to the position of the calculated coordinate (Step S224). Since each data is stored with separation by break and linefeed, and a blank (space) in the telephone directory data storage unit 134 in the embodiment, the designation position discriminating unit for each application 133 selects the address information which matches with a group of text neighboring "@" from the telephone directory data storage unit 134 and determines as designated address information (Step S225). Further, the designation position discriminating unit for each application 133 can designate address information using a part of the domain name such as "com" or "carp" instead of "@".

Returning to FIG. 3, an explanation will follow. When address information is designated (Step S206) by pressing an address of an e-mail in the telephone directory window 142 with such as fingertip, the designated address information, in another words the whole e-mail address assigned by the user, is highlighted on the display 105 (Step S207).

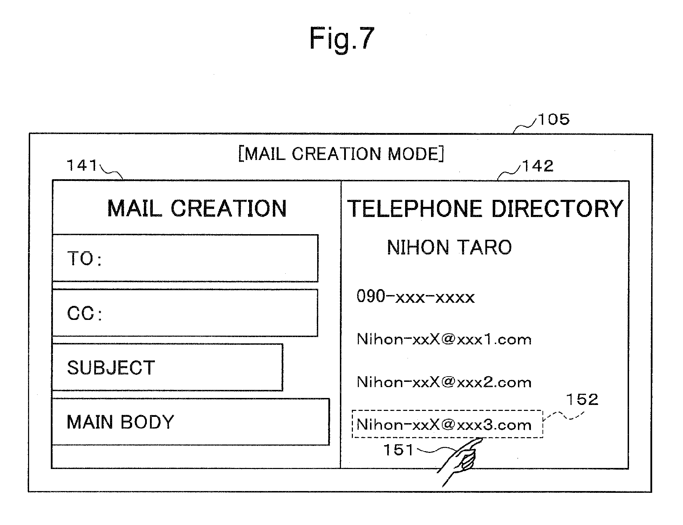

FIG. 7 is an example showing the display 105 when an e-mail address is highlighted. An e-mail address 152 which is pressed down by the user with the fingertip 151 is highlighted in FIG. 7. A background of an e-mail address was colored in yellow as a method for highlighting in this embodiment. Blinking of e-mail address or inverting light-dark of background and text information may be used. The fingertip 151 was displayed smaller to the display 105 for an easiness of looking into in FIG 7. The fingertip 151 is displayed smaller to the display 105 in the following drawings.

Then the user presses down a field of "TO" in the mail creation window 141 again using a fingertip 151 during the state in which an e-mail address is highlighted. Then, the coordinate detecting unit 125 calculates a coordinate in the position that the user pressed (Step S208) and pastes the designated address information in the coordinate position that the designation position discriminating unit for each application 133 calculated (S209). In other words, an e-mail address 152 highlighted in the telephone directory window 142 is pasted on a "TO" field in the mail creation window 141 in this embodiment.

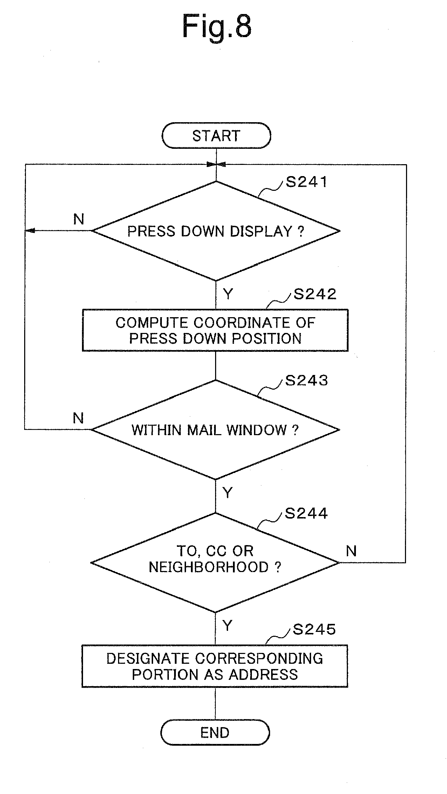

A determination method for address information pasting position is amended with FIG. 8. FIG. 8 is a flow chart of determining process of the pasting position of address information shown in the Step S208 in FIG. 6. The coordinate detecting unit 125 calculates a coordinate in the position pressed down (Step S242) when a press-down is detected in the display 105 (step S241: Y). The main control unit 123 performs usual mail creation processing if the position of the coordinate is not in the mail creation window 141 (step S243:N), or when the position of the coordinate is not the field regarding an address such as a "TO" field and a "CC" field or of its neighborhood (step S244:N).

On the other hand, the coordinate position is designated as the designated pasting position of the address information using designation position discriminating unit for each application 133 (Step S245) in case of that the coordinate position is the field about the address in the mail creation window 141 or in the neighborhood of it (step S243:Y and step S244:Y). In this embodiment, the designation position discriminating unit for each application 133 discriminates that a "TO" field was pressed down and the e-mail address 152 is pasted on a "TO" field.

When the neighborhood of the "TO" field or "CC" field is pressed down, the designation position discriminating unit for each application 133 determines that easer of nearest one was pressed down in S244. "BCC (Blind Carbon Copy)" field or the like is also taken as a field regarding address.

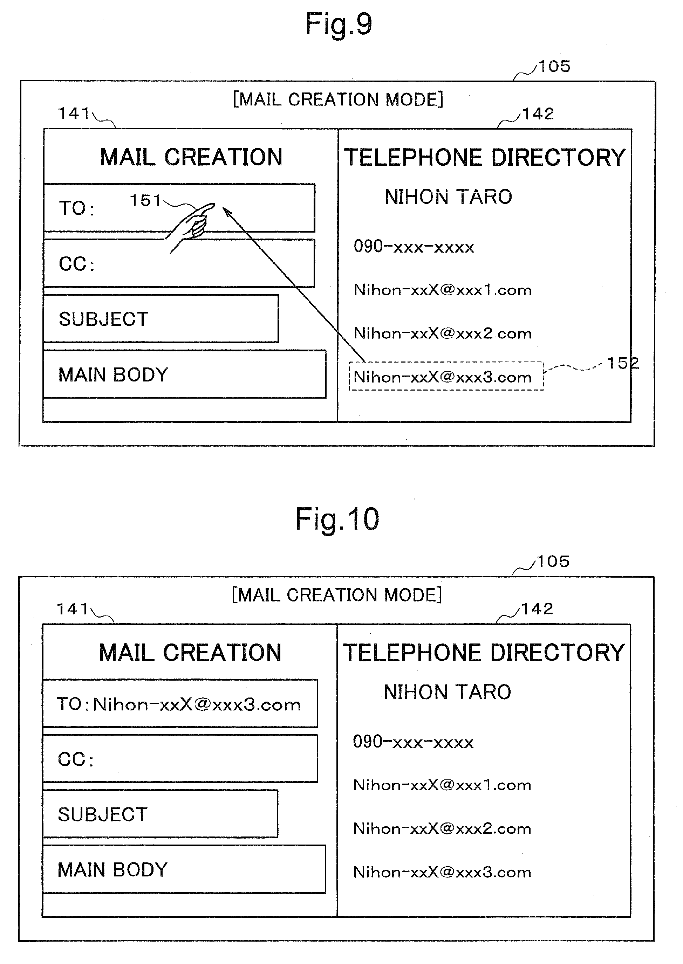

An example of the display is is shown in FIG. 9 when the user presses down a "TO" field using the fingertip 151 during the state in which a highlighting of an e-mail address 152 was performed. An example of the display 105 is also shown in FIG. 10 when the designated address information is pasted in a "TO" field. An e-mail address 152 with highlighting displayed in FIG. 9 is shown in the "TO" field of the mail creation window 141 in FIG. 10.

It is not necessarily restricted according to the embodiment that the neighborhood of the address field in a mail processing window 302 needed to be pressed down when the user pastes the e-mail address 152 with highlighting in an address field in the above. For example, the user can set it so that the designation position discriminating unit for each application 133 may paste designated address information into a "TO" field automatically when somewhere in the mail creation window 141 is pressed down during the state in that the e-mail address 152 is highlighted.

After the designation position discriminating unit for each application 133 determined address information, it can be set so that the detected address information may be pasted as it is on the push down position (in this embodiment, likewise, "TO" field) in the place where it is detected in S202 of FIG. 3. In this case, S207 is omitted.

Operations of the designation position discriminating unit for each application 133 is registered in advance in a table stored in the application program storing unit 131.

The user can also take cancellation processing using the operation input unit 129 when a wrong e-mail address is designated or pasted. It is also possible to cancel the operation by drawings such as "x" by the user on the touch panel 126 and analyzing in the gesture analysis unit 127.

Although the user pressed down an e-mail address and a "TO" field independently using the fingertip 151 in the above-mentioned description, it is not restricted to do so. For example, the user can paste the e-mail address on a "TO" field by moving (drag) the fingertip 151 while pressing an e-mail address with the fingertip 151, and releasing the pressing situation (release) in the "TO" field on the touch panel 126 of the display 105. In this case, the coordinate detecting unit 125 calculates a pressed position by the fingertip 151 continuously and the designation position discriminating unit for each application 133 designates the release position as the pasting position of the e-mail address.

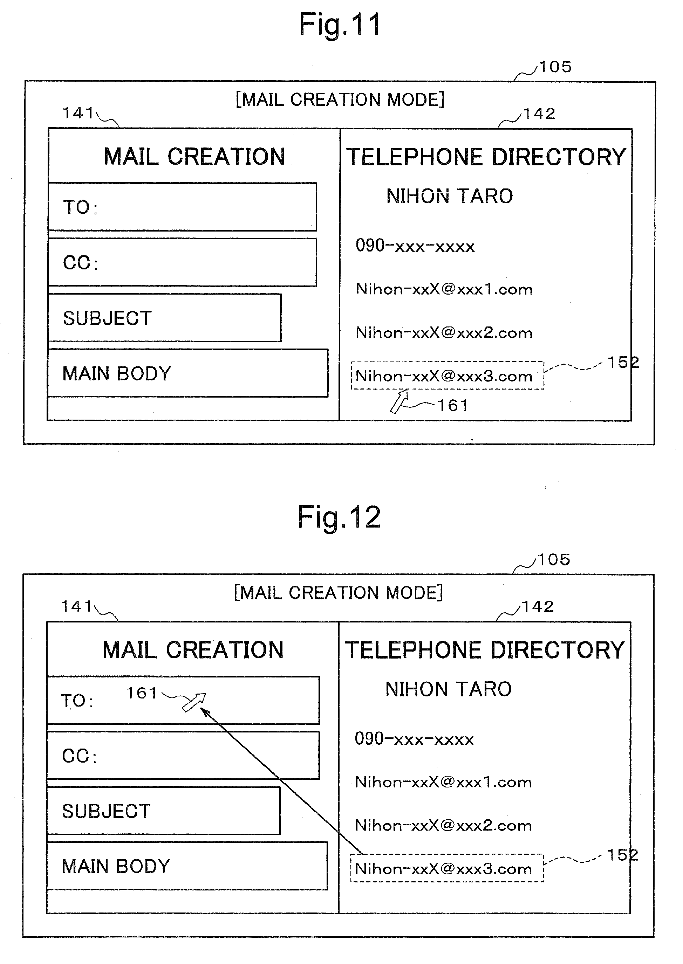

An example of the display 105 with using the pointing device 110 shown in FIG. 2, is shown in FIG. 11 and FIG. 12. The user drags (FIG. 11) the e-mail address 152 by operating the pointing device 110 and moves a cursor 161 to "TO" field while keeping with drag state. The e-mail address 152 dragged is pasted to "TO" field by releasing the drag state in the "TO" field (FIG. 12).

As mentioned above, the mobile phone 100 relating to the embodiment has a table for registering an operation substance (processing information) which the designation position discriminating unit for each application 133 performs by correlating to combinations of application program. The mobile phone 100 can perform appropriate processing corresponding to the function that is being performed by the process of the processing of the designation position discriminating unit for each application 133 to the input from the user based on processing information on the table.

Also in the embodiment, the designation position discriminating unit for each application 133 designates an e-mail address, the calculated coordinate of which is included in the rage of the display range, as the address information by utilizing the information stored in the telephone directory data storage unit 134. Accordingly, the user can designate a desired e-mail address without designating the starting position and the ending position of the displayed e-mail address.

### [THE SECOND EXEMPLARY EMBODIMENT]

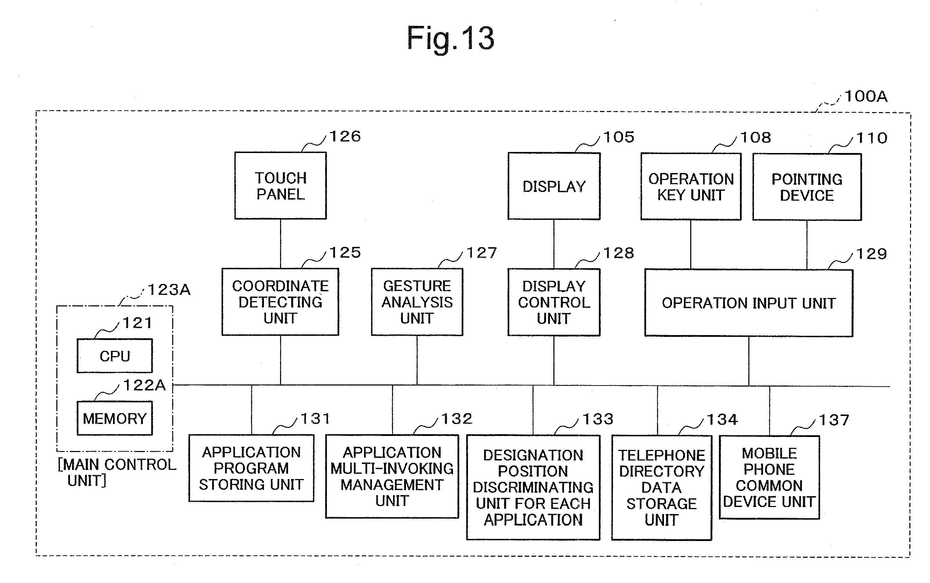

The second exemplary embodiment of the present invention will be described. A block diagram showing circuit configuration of a mobile phone 100A relating to this embodiment is shown in FIG. 13. In FIG. 13, the identical symbol is given to the same part as the part in the block diagram (FIG. 2) of the mobile phone 100 relating to the first embodiment. The external appearance of the mobile phone 100A according to this embodiment is similar to the mobile phone 100 according to the first embodiment. The mobile phone 100A according to this embodiment has a CPU 121 and a main control unit 123A with a memory 122A which stores a control program that the CPU 121 executes as shown in FIG. 13. The main control unit 123A controls each part in the mobile phone 100A. The main control unit 123A further controls application multi-invoking management unit 132 in this embodiment.

The application multi-invoking management unit 132 controls windows relating to each application when a plurality of application programs has been started simultaneously.

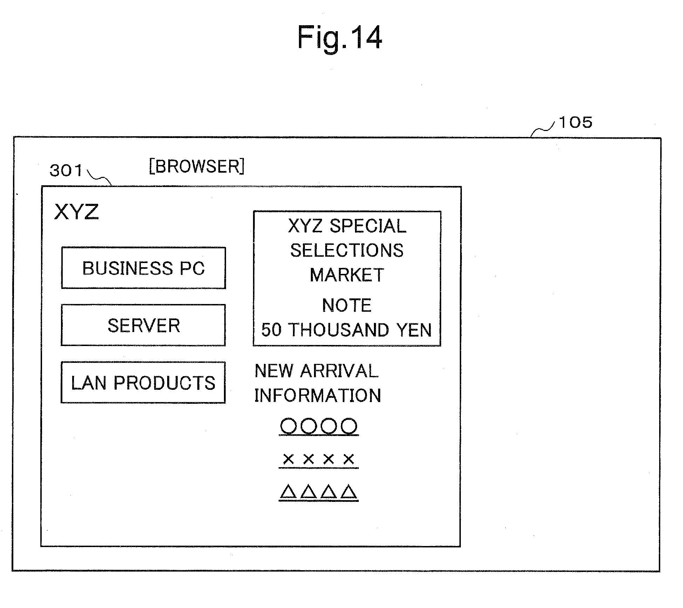

A processing, in the case when notifying a URL of a home page which a user is under browsing to a friend via e-mail, will be described using FIG. 14 through 20. In FIG. 14, the user is browsing a home page on the internet using the mobile phone 100A. A browser window 301 as the first window is displayed on the display 105 of the mobile phone 100A. As shown in FIG. 14, the URL of the home page under browsing is not displayed in the browser window 301 since the display 105 is small.

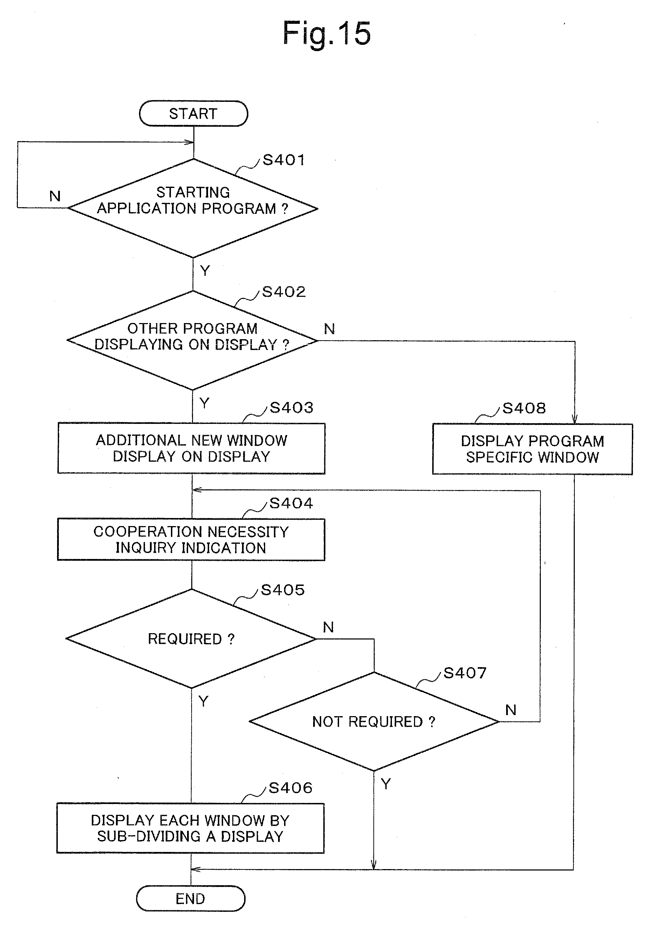

The user presses a mail button in the operation input unit 129 and starts an electronic mail application program, when the user notifies the URL of a home page under browsing to a friend by e-mail in the state of FIG. 14. A processing of the mobile phone 100A in this case this will be described. In FIG. 15, the flow chart of processing of the mobile phone 100A, when having started application software of two or more, is shown. In FIG. 15, when a new application program is started (step S401: Y) while an application program has been started, the main control unit 123A determines whether a window for an application program which has been started is displayed on the display 105 (Step S402). Then, when a window has been already displayed (step S402: Y), the main control unit 123A starts the application multi-invoking management unit 132. The application multi-invoking management unit 132 displays a new window in addition to a window which has been already displayed (S403). Here in Step S402, when a window of being activated application is not shown on the display 105 (step S402: N), the main control unit 123A displays the mail processing window 302 on the display 105 as the first window without starting the application multi-invoking management unit 132 (Step S408).

In this embodiment, the browser window 301 as the first window is already displayed on the display 105. Accordingly, the application multi-invoking management unit 132, in the display 105, displays the mail processing window 302 as the second window over the browser window 301 as the first window.

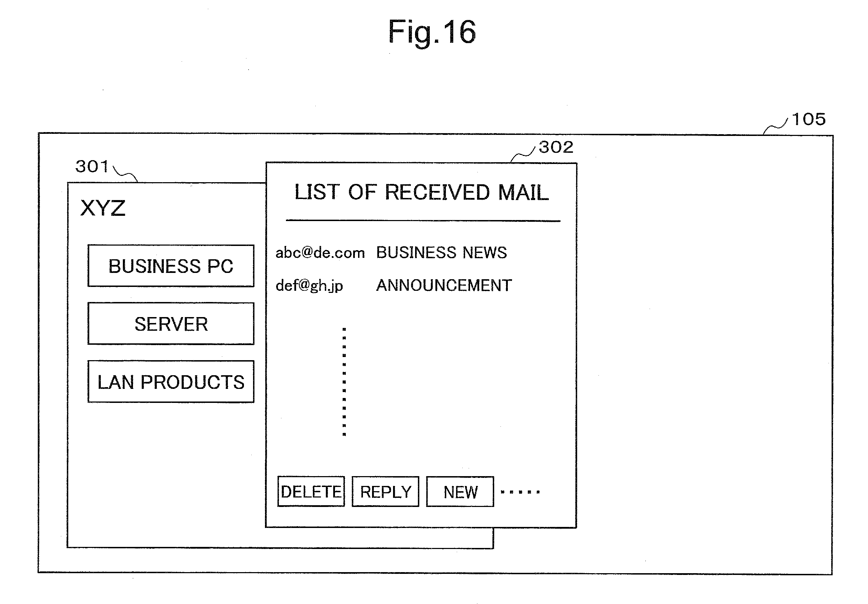

In FIG. 16, an example of the display 105 of the state showing the mail processing window 302 over the browser window 301 is shown. In FIG. 16, according to this embodiment, it was set so that a list of received e-mail display might be displayed first in the mail processing window 302. In another way, it may be set so that a mail creation display or the like may be shown in the mail processing window 302 as a beginning.

Returning to FIG. 15, an explanation will follow. In Step S403, when a new window is displayed on the display 105, the application multi-invoking management unit 132 inquires the user whether two windows are cooperated (Step S404). For inquiring, for example, a pop-up window for inquiring the necessity of cooperation is displayed on the display 105. Then, when the user designates that a cooperation is necessary using the operation input unit 129 or the like (step S405: Y), the application multi-invoking management unit 132 divides the display 105 into the number of the window which cooperates, and displays each window (Step S406). Further, in S405, when the user designates that cooperation is necessary, the main control unit 123A starts the designation position discriminating unit for each application 133. In the meantime, when the user changes each window to the desired size and moves to the desired position using the operation input unit 129, S406 can be omitted.

Here in S405, when the user inputs that cooperation between the windows is not necessary (step S405: N), the main control unit 123A stops the application multi-invoking management unit 132. And the main control unit 123A controls two windows independently according to the input of user.

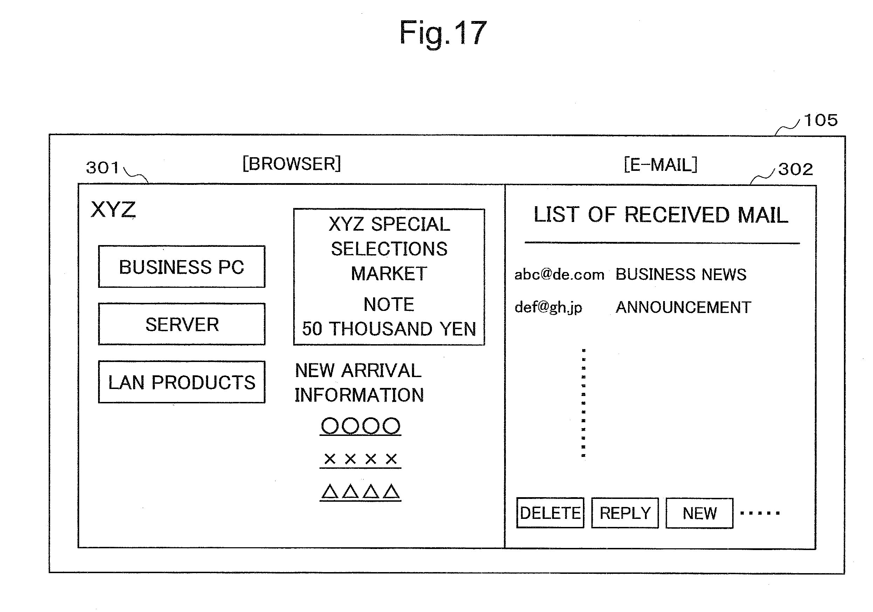

In FIG. 17, an example of the display 105 is shown when displaying the browser window 301 and the mail processing window 302 in parallel. By the parallel display of two windows, the user can perform desired input easily in each window.

For further transmitting the URL of a home page under browsing to a friend by e-mail while the browser window 301 and the mail processing window 302 are under cooperation, the user presses down a "new" button shown on the lower part of the mail processing window 302 of FIG. 17.

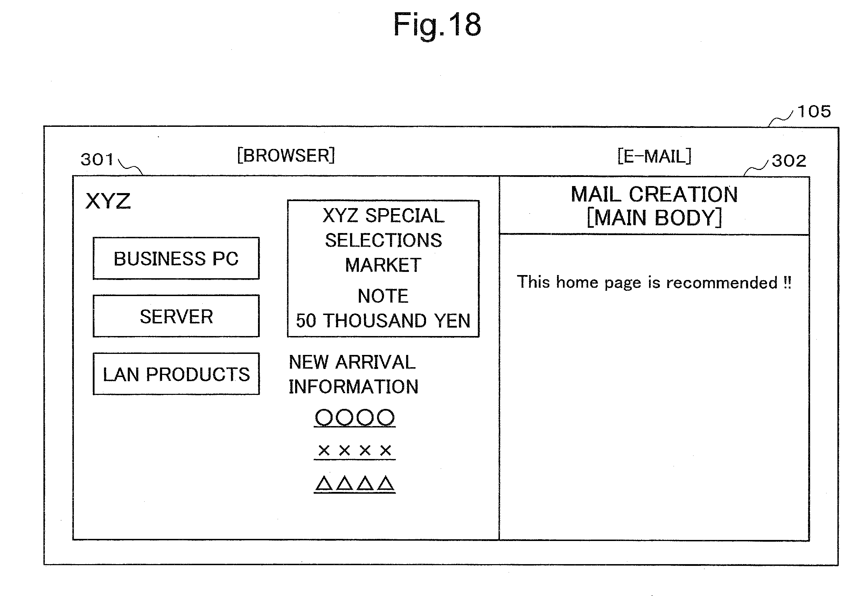

In FIG. 18, an example of the display 105 of the state, in which the user displayed a screen for e-mail main body creation and inputted a part of the main body of an e-mail, is shown, In FIG. 18, the home page under browsing is displayed continuously in the browser window 301 on the left side of the display 105. A screen for e-mail main body creation is also displayed in the mail processing window 302 on the right side of the display 105. In addition, the text of "This home page is recommended!!" displayed in the screen for e-mail main body creation is inputted by user using the key 107 or the like.

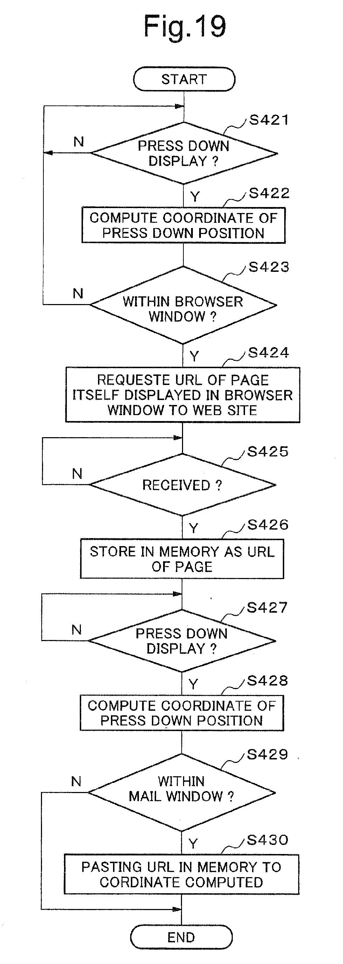

A procedure, for pasting an URL of a home page under browsing to the mail main body creation screen form the state of FIG. 18, will be described using FIG. 19. In FIG. 18, when the user presses down the arbitrary location in the browser window 301 on the display 105 using the fingertip 151 (step S421: Y), the coordinate detecting unit 125 calculates a coordinate in the position pressed down (Step S422).

If it is the case that the calculated coordinate is in the browser window 301 (step S423:Y), the designation position discriminating unit for each application 133 inquires the URL of a home page under browsing in the browser window 301 to a website via a cellular phone network (Step S424). And when information about the URL is received from the website (step S425: Y), the received URL is stored in the memory 122A (Step S426). If further the user presses down the desired position of the mail processing window 302 (step S427: Y), the coordinate detecting unit 125 calculates the coordinate in the position pressed down (Step S428). In the case that a calculated coordinate is in the mail processing window 302 (step S429: Y), the designation position discriminating unit for each application 133 pastes the URL which is stored in a memory into the coordinate position calculated (Step S430).

Here in this embodiment, like the first embodiment, these series of operations of the designation position discriminating unit for each application 133 is based on processing information held in the table stored in the application program storing unit 131.

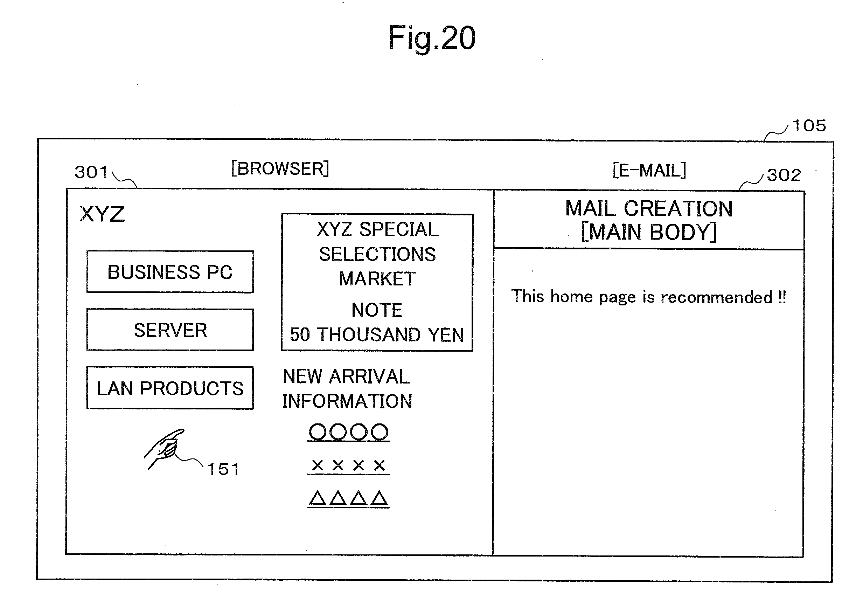

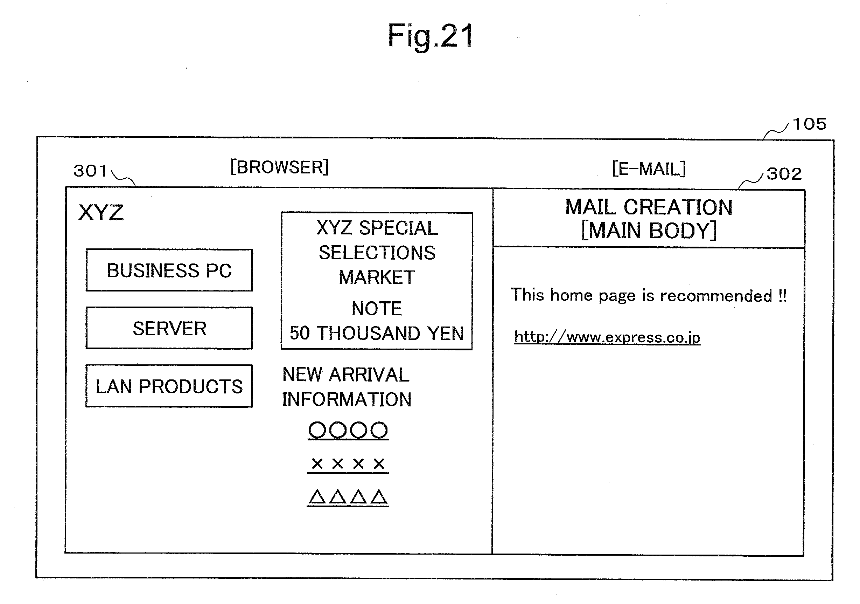

Additionally, in the case when the location outside the browser window 301 is pressed down in Step S423 or the location outside the mail processing window 302 is pressed down in Step S429, the main control unit 123 performs processing corresponding to the pressing down by user. In FIG. 20, an example when the user pushing down a part of the home page under browsing and in FIG. 21, an example of the display 105 when URL of a home page under browsing is pasted on a mail main body are shown. In FIG. 21, the user can move URL pasted in the mail processing window 302 to another locations in the window 302.

Here in this embodiment, although it is described that the user presses down the display 105, in another words operating the touch panel 126, it is not necessarily restricted above-mentioned. For example, a pointing device 110 or the like can be used. In this case, the URL is pasted on the position that a cursor displayed in the window displays.

According to the mobile phone 100A relating to the second embodiment described above, when two windows are cooperatively indicated, the user, by simply pushing down a part of the browser window 301, can get the URL of a home page under browsing. If further the mail processing window 302 is pressed down successively afterward, the acquired URL can be pasted on a screen for the mail main body creation. Accordingly, the user can inform the URL of a home page under browsing to friend or the like easily by an e-mail. Additionally, only pressing down is necessary, even if the range of the window is very narrow, it is possible to designate URL easily and transmit to the other party in a short time.

### [MODIFICATION OF THE SECOND EXEMPLARY EMBODIMENT]

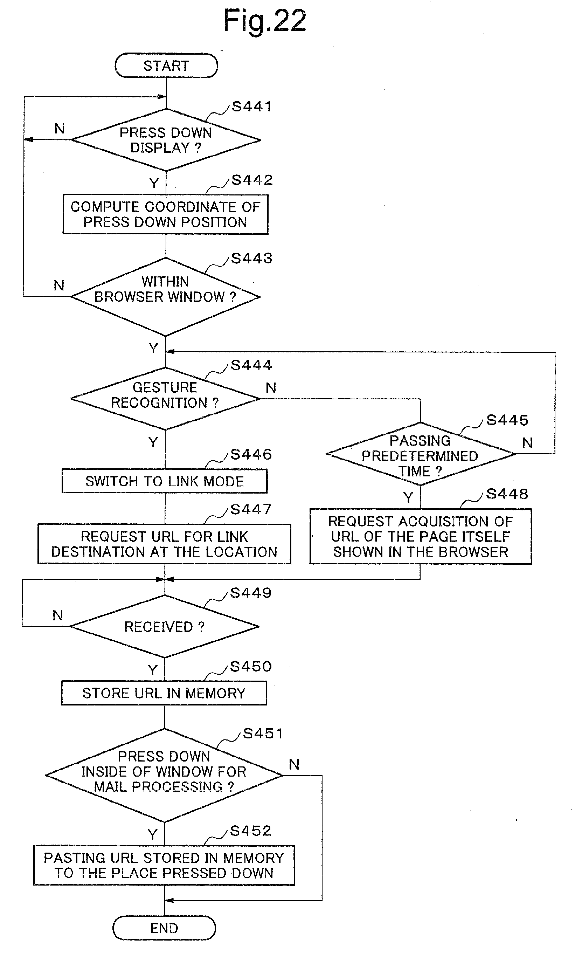

In the second exemplary embodiment, the URL of a home page under browsing is informed to other party, a URL which is embedded in a home page under browsing as link information can be also informed to other party. In this case, a mode (hereinafter, referred to as the whole mode) for informing to other party of URL of a home page itself under browsing, and a mode (hereinafter, referred to as a link mode) for informing to other party of URL which is embedded in a home page under browsing as link information are to be prepared. And, the user switches the mode between the whole mode and the link mode according to the URL desired to be transmitted. The modification of the second embodiment will be described using FIG. 22 in the followings.

FIG. 22 is a flow chart showing a processing for getting a URL by switching the whole mode and a link mode. If the user presses down the display 105 under the condition in that the browser window 301 and the mail processing window 302 are displayed with cooperation (step S441:Y), the coordinate detecting unit 125 calculates a coordinate of the pressed down position (Step S442). In the case when a calculated coordinate is in the browser window 301 (step S443:Y), the designation position discriminating unit for each application 133 monitors whether the user performs predetermined input within the predetermined time (Step S444 and Step S445). In this embodiment, the designation position discriminating unit for each application 133 monitors whether a starbursts figure was drawn as predetermined input. And, if the user draws an starbursts figure by pressing down the display 105 (step S444:Y), the coordinate detecting unit 125 and the gesture analysis unit 127 detect it and convey the gesture input, in another word the things that predetermined input is performed, to the designation position discriminating unit for each application 133.

If input of a predetermined gesture is observed before the predetermined lapse time past, the designation position discriminating unit for each application 133 switches from the whole mode to a link mode (Step S446). After that, the designation position discriminating unit for each application 133 inquires the URL of link information which is in the neighboring coordinate calculated in Step S442 instead of the URL of a home page under browsing to the website via a cellular phone network (Step S447).

On the other hand, if input of a predetermined gesture is not observed within predetermined time (step 5444: N and step S445: Y), the whole mode is maintained. In other words, the designation position discriminating unit for each application 133 inquires the URL of a home page under browsing to a website via a cellular phone network (Step S448).

The designation position discriminating unit for each application 133, upon the receipt of URL of link information or URL of a home page from a website (step S449: Y), stores received URL in the memory 122A (Step S450).

In the following, since as it has been described in the second embodiment, the detailed description will be omitted. In short, by pushing down the desired position in the mail processing window 302 by the user (step S451:Y), the designation position discriminating unit for each application 133 pastes the URL stored in the memory 122A on the position pressed down (Step S452).

In the mobile phone 100A according to modification of the second embodiment described above, the user, by executing the predetermined input successively to the pressing down of the predetermined position in the browser window 301, can pastes URL of link information displayed on the predetermined position of the browser window 301, instead of URL of a home page under browsing, to the predetermined position of the predetermined window 301. Accordingly, it is possible to designate desired URL easily, and transmit to the other party in a short time.

### [THE THIRD EXEMPLARY EMBODIMENT]

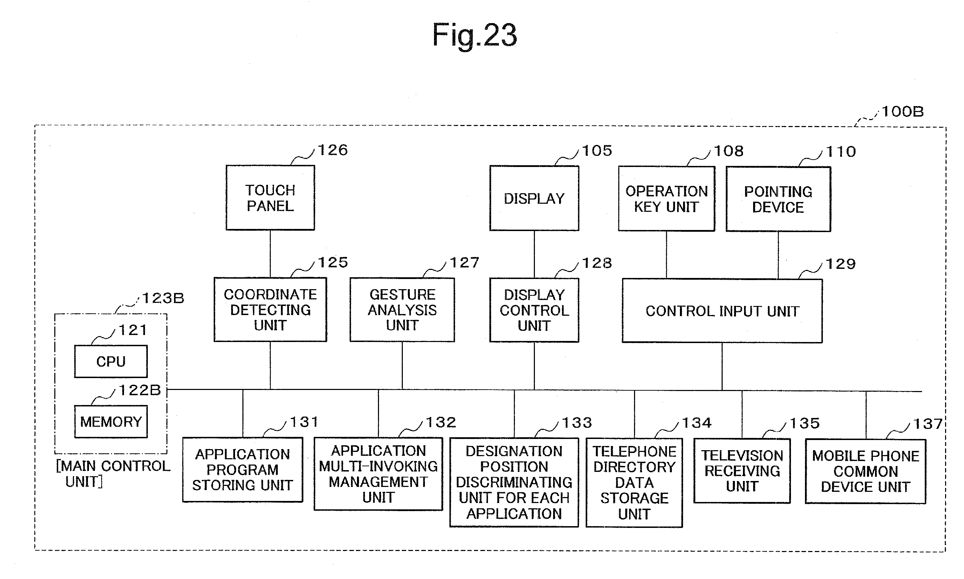

The third exemplary embodiment of the present invention will be described. A block diagram of circuit configuration of a mobile phone 100B as an information processing apparatus according to this embodiment is shown in FIG. 23.

In FIG. 23, the identical symbol is given to the same part as the part in the block diagram (FIG. 2) of the mobile phone 100 relating to the first embodiment. In addition, the external appearance of the mobile phone 100B according to this embodiment is similar to the mobile phone 100 according to the first embodiment.

As shown in FIG. 23, the mobile phone 100B according to this embodiment has a CPU 121 and a main control unit 123B with a memory 122B which stores a control program that the CPU 121 executes. The main control unit 123B controls each part in the mobile phone 100B. In this embodiment the main control unit 123B further controls a television receiving unit 135 The television receiving unit 135 executes motion picture viewing application which watches television broadcasting such as a terrestrial mainly.

In the following, a processing, for informing program identification information on television broadcasting under watching to a friend by e-mail, will be described.

The user is watching television broadcasting with displaying an image of television broadcasting on the display 105 and outputting sound from the speaker 106.

In this state, when informing program identification information on television broadcasting, which the user is watching, to a friend by e-mail, the user presses a mail button in the operation input unit 129 and starts an electronic mail application program.

When an electronic mail application program starts while the motion picture viewing application is active, the main control unit 123B starts an application multi-invoking management unit 132. An application multi-invoking management unit 132 displays a window for mail processing as the second window on the display 105 in addition to the window for the televisions as the first window. And, when the user executes input for the cooperation of two windows, the application multi-invoking management unit 132 displays a window for televisions and a window for mail processing in parallel, and makes data cooperate between two windows. The main control unit 123B further starts the designation position discriminating unit for each application 133.

In addition, when the user inputs that data cooperation between the windows is unnecessary, the main control unit 123B stops the application multi-invoking management unit 132 and controls two windows independently without starting the designation position discriminating unit for each application 133.

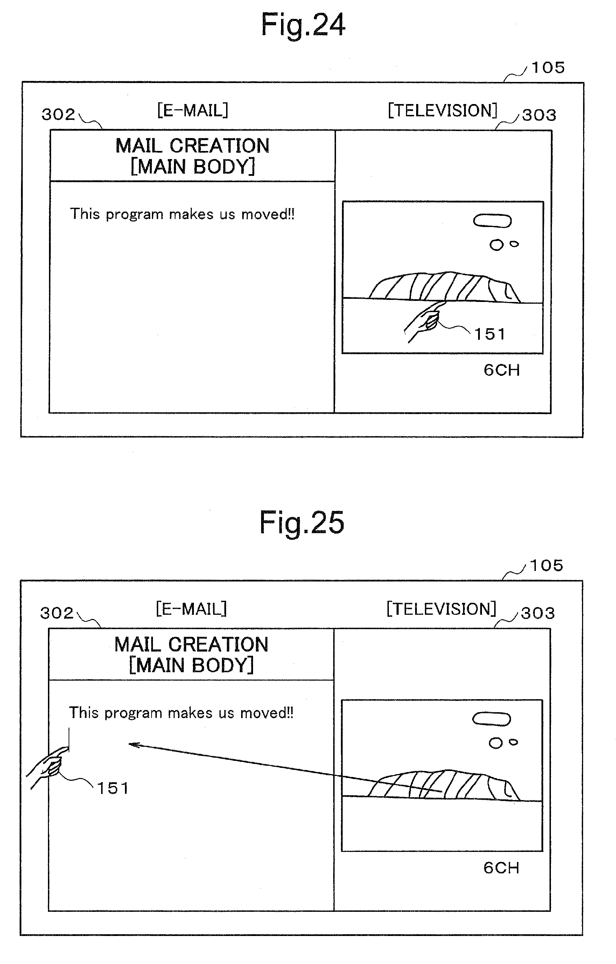

In this embodiment, the user, while cooperate indication of the window for televisions and the window for mail processing was underway, presses the part of the display screen of television broadcasting during watching using a fingertip 151. The state of above-mentioned is shown in FIG. 24. In FIG. 24, a television window 303 as the first window and the mail processing window 302 as the second window are displayed on the display 105. The user, while two windows, 302 and 303, were displayed in parallel, presses the arbitrary position of the television window 303 using a fingertip 151. By detecting pressing in the television window 303 with a coordinate detecting unit 125, the designation position discriminating unit for each application 133 inquires program identification information on television broadcasting under watching to a website via a cellular phone network. In the case when program identification information is received from the website, the received program identification information is stored in the memory 122B.

In this embodiment, the user further moves (drag) the fingertips 151 on the display 105 while keeping pressing the display 105. The user dissolves the pressing condition by the fingertip 151 (release) at the desired position of the mail processing window 302. By detecting a series of operation of the user with the coordinate detecting unit 125, the designation position discriminating unit for each application 133 pastes program identification information stored in the memory 122B on the release position in the mail processing window 302.

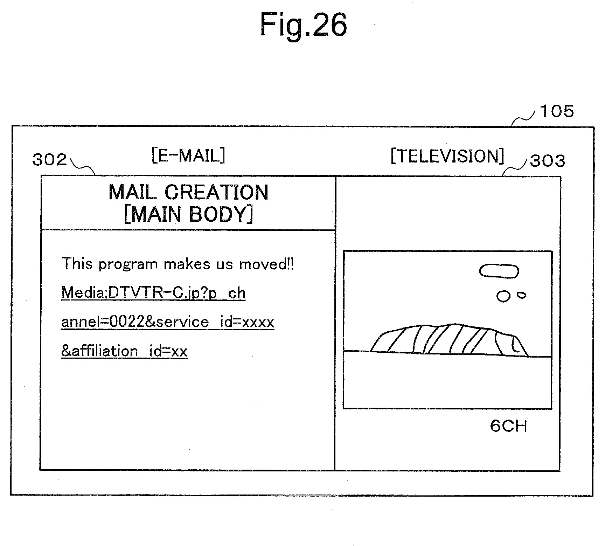

An example of the state that the user dissolves the pressing condition by the fingertip 151 at the desired position of the mail processing window 302 is shown in FIG. 25. An example of the display 105 in the state in which the program identification information on television broadcasting under watching was pasted on the mail main body is shown in FIG. 26. The friend who received this e-mail can begin to watch television program, if the mobile phone receiving the e-mail has the television program receiving function, by clicking program identification information described in the mail main body.

In this embodiment, although the user dragged on the display 105 to the desired position of the mail processing window 302, it is not necessarily restricted to this. By pressing the desired position of the mail processing window 302 after pressing the arbitrary position of the television window 303by user, it can be set up so that the designation position discriminating unit for each application 133 may paste program identification information on the mail main body. These operations of the designation position discriminating unit for each application 133 are based on processing information registered in the table stored in the application program storing unit 131.

Further, as program identification information, the kind of radio waves such as terrestrial digital broadcasting, the name of the broadcasting station and the channel number or the like can be used.

According to a mobile phone 100B relating to the third embodiment described-above, while the television window 303 and the mail processing window 302 are in the state to be displayed in parallel and cooperated, by dragging bridging over the two windows 302 and 303, the program identification information on television program under watching can be pasted on the main body of an e-mail.

Accordingly, for example, the user of a mobile phone 100B when becoming difficult to watch a television program can ask recording of the program by transmitting program identification information to a mobile phone of such as a friend, easily.

### [THE FOURTH EXEMPLARY EMBODIMENT]

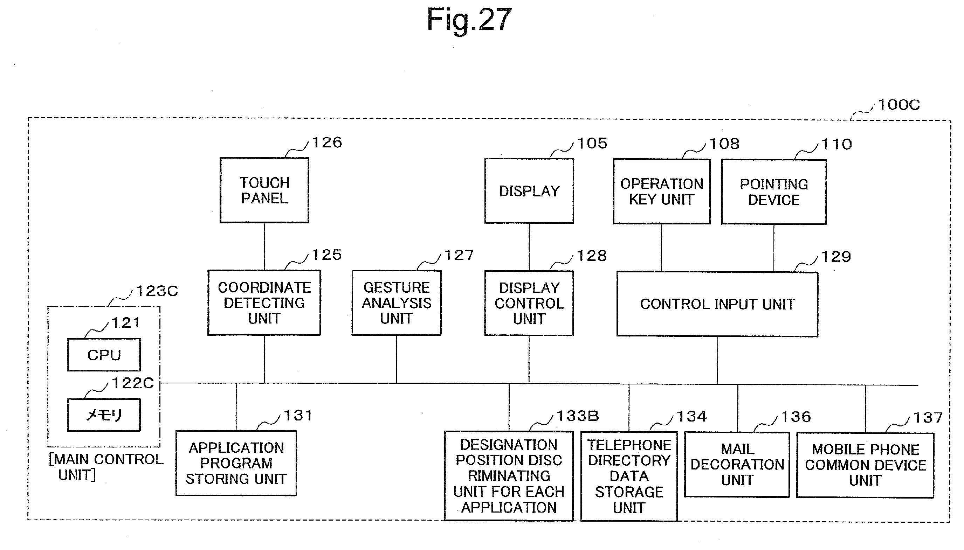

The fourth exemplary embodiment of the present invention will be described. A block diagram of circuit configuration of a mobile phone 100C as an information processing apparatus according to this embodiment is shown in FIG. 27. In FIG. 27, the identical symbol is given to the same part as the part in the block diagram (FIG. 2) of the mobile phone 100 relating to the first embodiment. The external appearance of the mobile phone 100C according to this embodiment is similar to the mobile phone 100 according to the first embodiment.

The mobile phone 100C according to this embodiment has a CPU 121 and a main control unit 123C with a memory 122C which stores a control program that the CPU 121 executes as shown in FIG. 27. The main control unit 123C controls each part in the mobile phone 100C. In this embodiment, the main control unit 123C further controls mail decoration unit 136. The mail decoration unit 136 executes mail decoration application which performs various decoration to a mail main body while creating a mail main body of an e-mail. According to this embodiment, a designation position discriminating unit for each application 133B controls a window of each application when a plurality of application programs have been started simultaneously. In another word, according to this embodiment, the designation position discriminating unit for each application 133B has the function of the application multi-invoking management unit 132 which has been described in the second embodiment and the third embodiment.

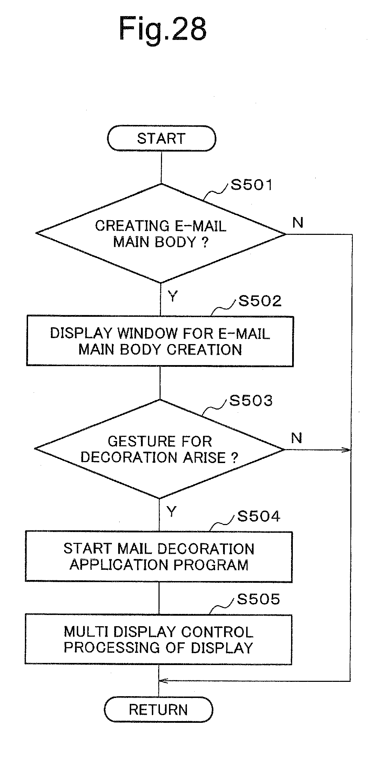

In the following, a procedure for decorating the main body of an e-mail under user creation will be described using FIG. 28. FIG. 28 is a flow chart showing a procedure of multi display of a display during the main body creation of an e-mail.

In FIG. 28, by pressing of a mail button in the operation input unit 129 by the user (step S501: Y), an electronic mail application program is activated. Then a mail main body creation display is displayed in the mail processing window 302 on the display 105 (Step S502).

In the case when a mail decoration application for decorating a main body of an e-mail under creation is executed, the user further inputs predetermined gestures within predetermined time span. In this embodiment, after a mail main body creation display is displayed on the display 105, the user presses down the display 105 and draws a circular figure within 10 seconds. Then, the coordinate detecting unit 125 and the gesture analysis unit 127 detect the user's input, and transmit to the main control unit 123C about gesture input.

When a gesture is inputted by the user (step S503: Y), the main control unit 123C starts the designation position discriminating unit for each application 133B and a mail decoration unit 136 (Step S504).

The designation position discriminating unit for each application 133B displays a new window for decoration on the display 105 (Step S505), and makes data of both, the mail processing window as the first window and the decoration window as the second window, cooperate. Meanwhile, in S503, in the case when input of a predetermined gesture is not recognized in the predetermined time span (step S503: N), the main control unit 123C performs usual mail creation processing. According to this embodiment, although predetermined gesture input within the predetermined time span by user activates the mail decoration unit 136, the mail decoration unit 136 can be also started instead by pressing a button for decoration in the operation input unit 129.

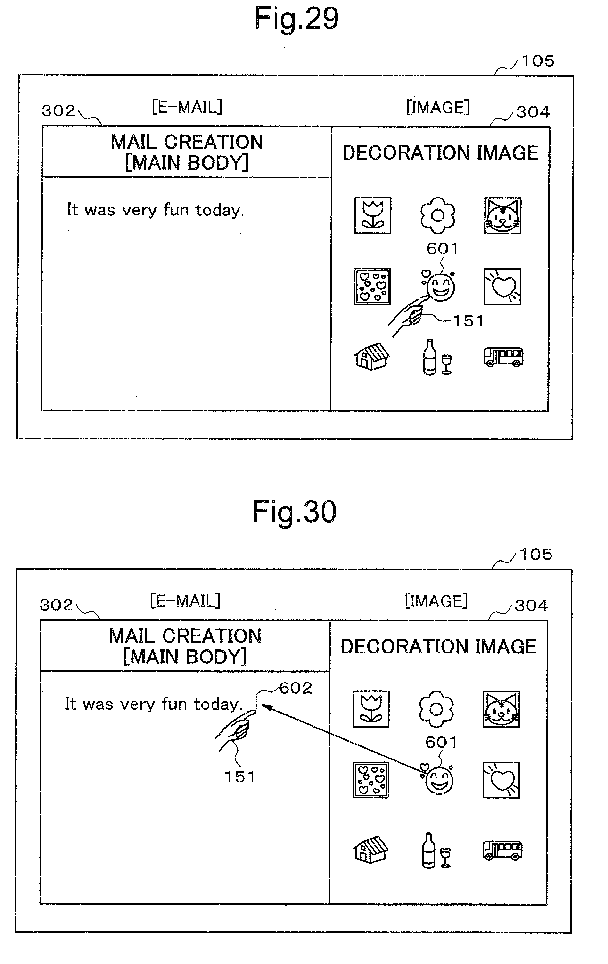

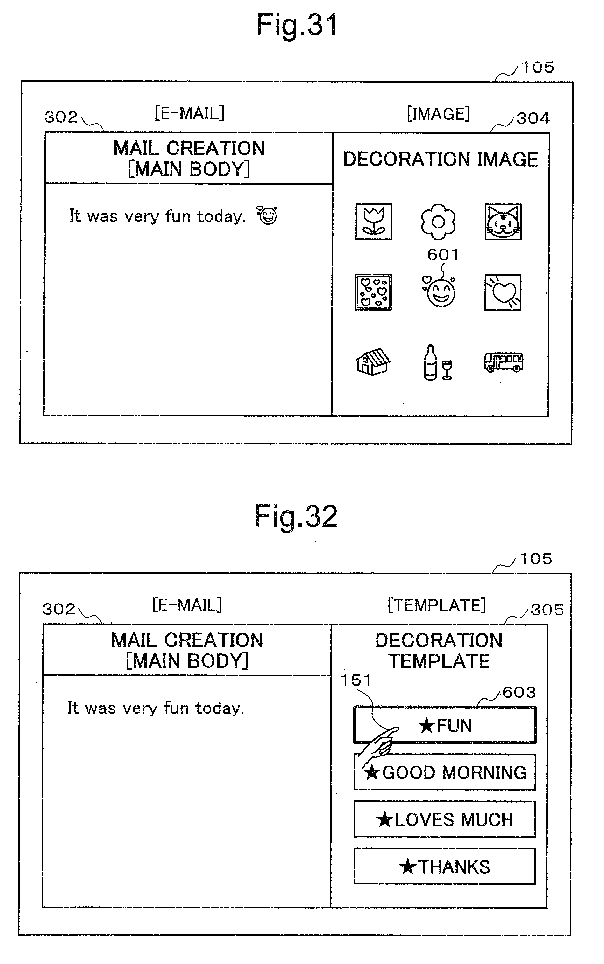

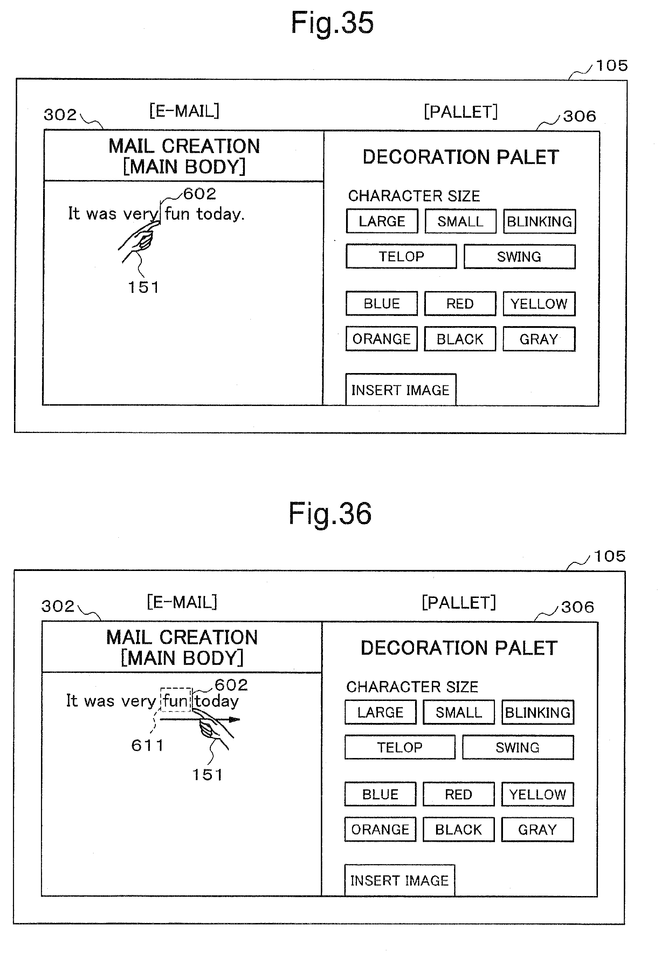

A procedure for decorating a mail main body will be described using FIG. 29 to FIG. 37 in the followings. FIG 29 to FIG. 31 are figures for explaining a procedure of decoration using a decoration image. FIG. 32 to FIG. 34 are figures for explaining a procedure of decoration using a decoration template. FIG. 35 to FIG. 37 are figures for explaining a procedure of decoration using a decoration pallet.

First, a case for decoration using a decoration image will be described using FIG. 29 to FIG. 31. In FIG. 29, the mail processing window 302 and a decoration window 304 are displayed on the display 105 of a mobile phone 100C in parallel. A mail main body under creation is shown in the mail processing window 302. On the other hand, a plurality of pictographs for decoration is shown in the decoration window 304.

In FIG. 29, the user presses a desired pictograph 601 using the fingertip 151 and moves on the display 105 (drag) while keeping the pictograph 601 is pressed as shown in FIG. 30. The user dissolves the pressing condition by the fingertip 151 (release) at the desired position of the mail processing window 302. According to this embodiment, a cursor 602 is shown in the position where it is pressed by a fingertip 151.

Detecting a series of operation of user by the coordinate detecting unit 125, the designation position discriminating unit for each application 133B inserts the pictograph 601 designated by user in the release position of the mail processing window 3 02 using the mail decoration unit 136. The state in that a pictograph 601 was pasted on a mail main body is shown in FIG. 31.

In the above-mentioned processing, although the pictograph 601 was pasted on the release position, a pictograph 601 can be pasted on the end of a main body as if it is a default. In this case, when simply releasing it at the arbitrary position in the mail processing window 302, the user can paste a designated pictograph 601 in the mail processing window 302. Accordingly, even if the mail processing window 302 is small, a pictograph 601 can be inserted in an end of a main body easily. These setting can be registered in the table stored in the application program storing unit 131 in advance.

Meanwhile, if a plurality of images is displayed instead of a pictograph 601 in the decoration window 304, a desired image can be pasted on a mail main body easily.

Next, a case decorating with a decoration template will be described using FIG. 32 to FIG. 34. In FIG. 32, a mail main body under creation is displayed in the mail processing window 302. On the other hand, a plurality of decoration templates for decoration is displayed in the decoration window 305.

In this state, the user presses a desired decoration template using a fingertip 151, drags it to the desired position of the mail processing window 302, and releases it. In FIG. 32, the user drags the decoration template 603 on which it is written "fun" while keeping it pressed and releases it at the desired position on the mail processing window 302.

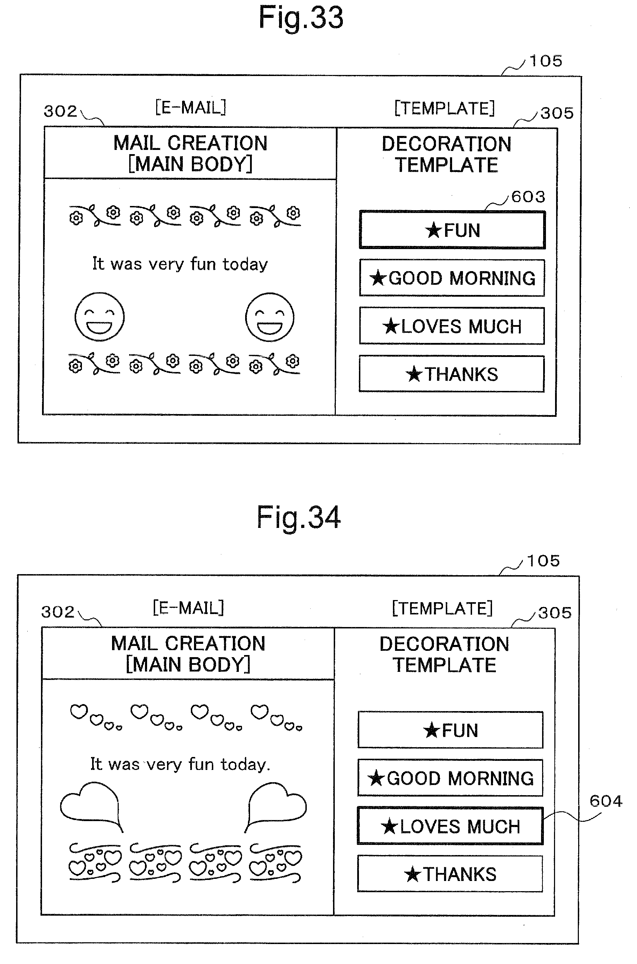

A coordinate detecting unit 125 detects a series of the user's operation, and the designation position discriminating unit for each application 133B decorates a mail main body based on the contents that were set to a decoration template 603 on which it was written "gaily" in advance using a mail decoration unit 136. An example of the display 105, when decorated with the contents set in a decoration template 603 in which the mail main body is written as "fun", is shown in FIG. 33.

An example of the display 105 when decorating the mail main body by selecting a decoration template 604 in which it is written "loves much" is shown in FIG. 34.

Next, a case for decoration with a decoration pallet will be described using FIG. 35 to FIG. 37. In FIG. 35 to FIG. 37, a plurality of decoration pallets are shown in a decoration window 306 of the display 105.

For modifying a mail main body using the decoration pallet, the user first designates the range of the text for decoration in the mail processing window 302. Specifically, as shown in FIG. 35 and FIG. 36, the user presses the first text in the range for decoration with the fingertip 151, moves the fingertip 151 to the last text in the range for decoration while holding the pressing state and releases the pressing state. According to this embodiment, the cursor 602 is shown on the position pressed by the fingertip 151, and the range pressed with the fingertip 151 is highlighted. In the embodiment, the color of the background in the pressed range is changed into yellow as a method of a highlighting. Meanwhile, for renewing the designation of decoration range, after pressing the range which is highlighted once again with the fingertip 151 so that the selection is released, the desired range is designated again.

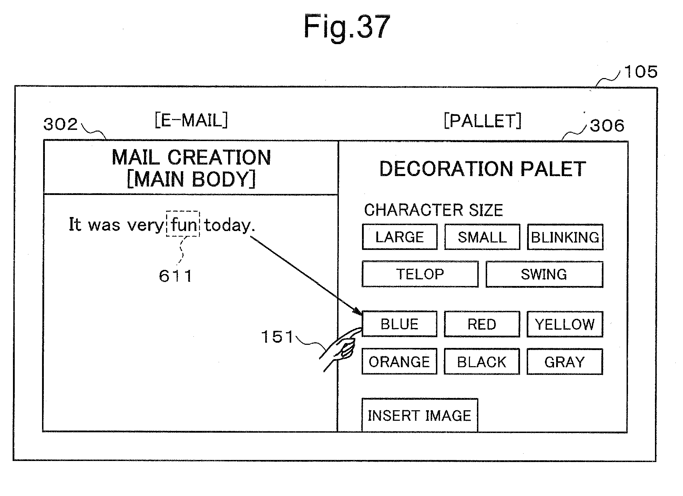

The user presses a desired decoration pallet in the decoration window 306 using a fingertip 151 while in the state in which the text 611 for decoration is highlighted. In FIG. 37, the user presses the "blue" in the decoration pallet 105.

The coordinate detecting unit 125 detects a series of the user operation, and the designation position discriminating unit for each application 133B makes the color of the decorating text 611 blue using the mail decoration unit 136.

In the explanation of FIG. 35 to FIG. 37, although decoration is performed by the text unit basis, it is not necessarily limited to this basis. The designation position discriminating unit for each application 133B, for example, can change the attribute of the text by the unit of sentences basis with an analysis of the sentences by such as detecting punctuation marks. Further, as the unit for decoration, a whole of sentences, a paragraph unit and a whole of the mail main body or the like are applicable. And these unit for decoration can be changed by changing the pressing direction or the like to the touch panel 126. In the embodiment, the unit of decoration and the processing of change for the unit of decoration can be registered in the table of the application program storing unit 131 with which a content of treatment of the designation position discriminating unit for each application 133B, previously mentioned, was registered.

According to the mobile phone 100C relating to the fourth embodiment described above, for an e-mail creation, the user starts an electronic mail application program and the mail decoration application program together. By displaying the mail processing window 302 and decoration window 304, 305 and 306 on the display 105 in parallel, the user can select desired decoration from decoration window 304, 305 and 306, and decorate the mail main body easily.

In addition, in this embodiment, like the first embodiment, a series of operation of the designation position discriminating unit for each application 133B is also based on processing information which is held on the table stored in the application program storing unit 131

### [THE FIFTH EXEMPLARY EMBODIMENT]

The fifth exemplary embodiment of the present invention will be described. A mobile phone according to this embodiment is similar to the mobile phone 100 according to the first embodiment. In particular, it has the same composition as the block diagram (FIG. 2) of the mobile phone 100 according to the first embodiment. It has the same external appearance as the mobile phone 100 according to the first embodiment.

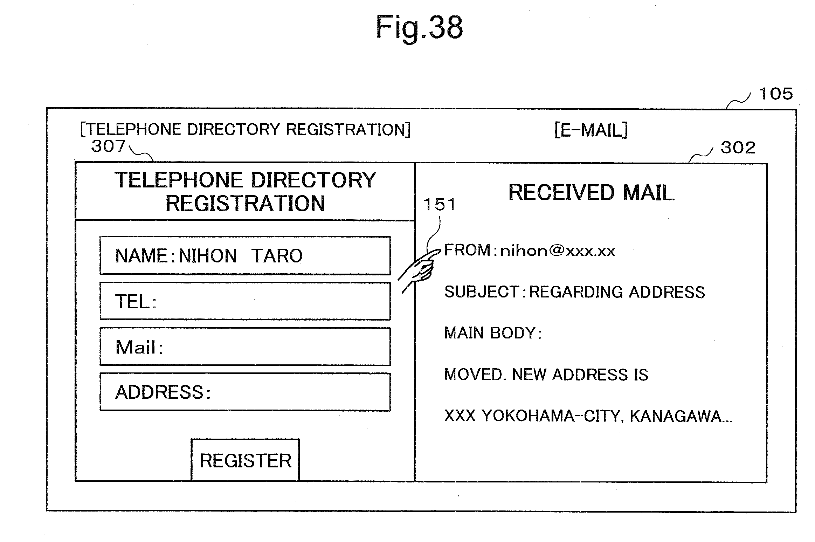

In the fifth embodiment, the user registers the contents shown in the mail processing window 302 with a telephone directory data storage unit 134. An operation of the mobile phone 100 of this embodiment will be described using FIG 38 to FIG. 43.

When the user is reading an e-mail received from a friend, by further starting a telephone directory application program, as shown in FIG. 38, a telephone directory registration window 307 as the second window are displayed on the display 105 in addition to the mail processing window 302 as the first window. When the telephone directory registration window 307 is displayed newly in addition to the mail processing window 302, the main control unit 123 starts the designation position discriminating unit for each application 133.

In FIG. 38, when the user presses the mail address of the reception origin displayed in the mail processing window 302 using the fingertip 151, the coordinate detecting unit 125 detects a series of the operations of user, and the designation position discriminating unit for each application 133 designate the address of the reception origin as a object to be pasted.

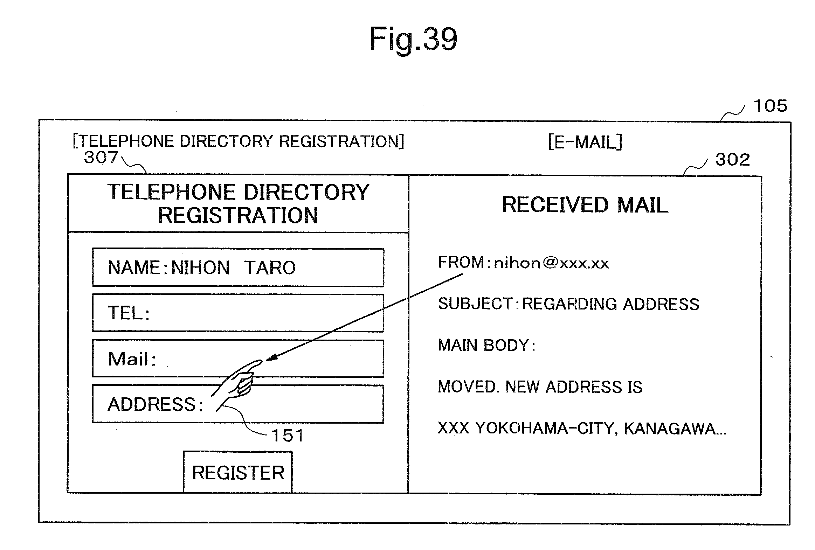

As shown in FIG. 39, the user further moves (drag) the fingertip 151 on the display 105 while keeping the mail address of the reception origin pressed.

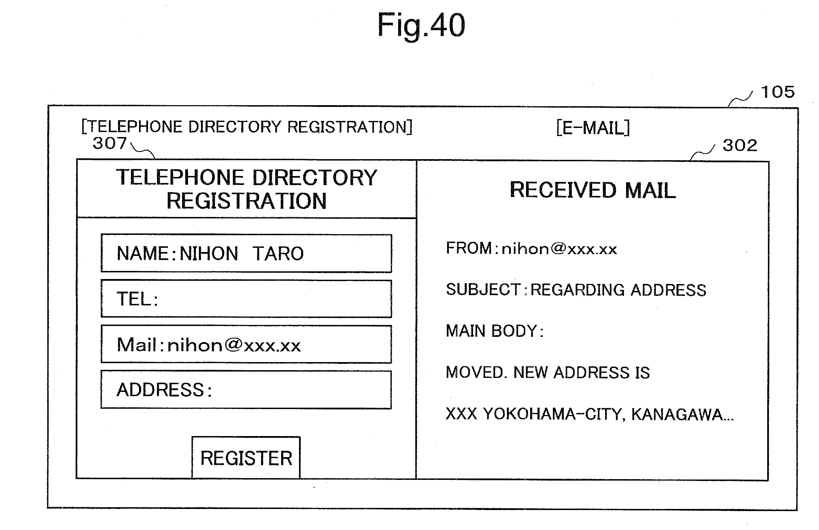

Finally, when releasing it at the desired position of the telephone directory registration window 307, the coordinate detecting unit 125 detects a series of the operations of user and the designation position discriminating unit for each application 133 designates that the position released is the pasting destination. The designation position discriminating unit for each application 133 pastes the mail address of the reception origin on the pasting destination in the telephone directory registration window 307. An example of the display 105, when the mail address of the reception origin is pasted on the registration column of the mail address in the window 307 for telephone directory registration, is shown in FIG. 40.

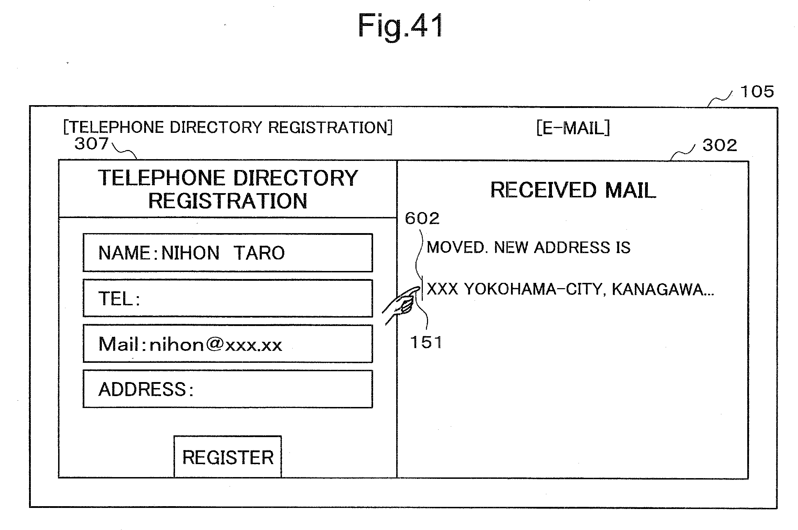

Next, a case, when a text shown in the main body of the mail processing window 302 is pasted into a registration column of the address in the telephone directory registration window 307, will be described using FIG. 41 to FIG. 43.

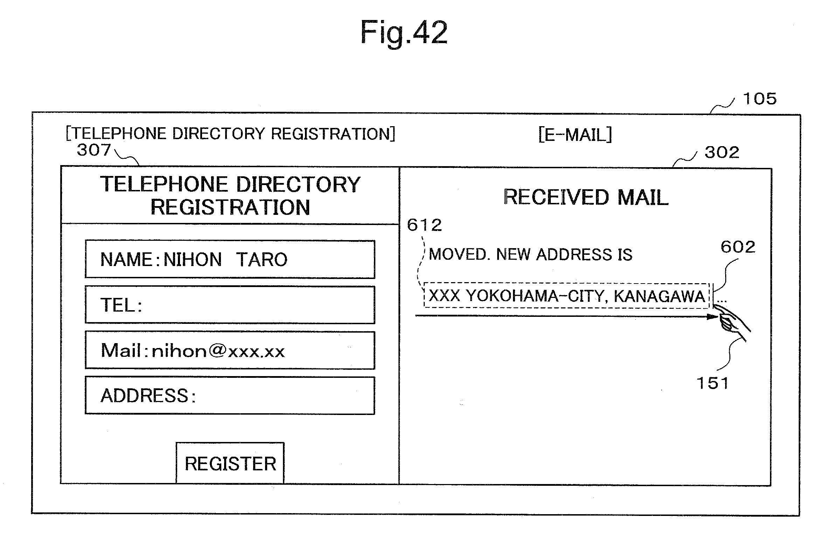

In FIG. 41 and FIG. 42, the user presses a text in the mail processing window 302 and specifies the range. The display control unit 128 highlights the range specified by the user. Pressing the registration column of the address in the telephone directory registration window 307 while a desired text 612 is displayed with highlight, provides that the designation position discriminating unit for each application 133 pastes the specified text into the registration column of the address in the telephone directory registration window 307.

After performing other required correction and pushing down the registration button in the telephone directory registration window 307 by user, information pasted from the mail processing window 302 can be registered in the telephone directory data storage unit 134.

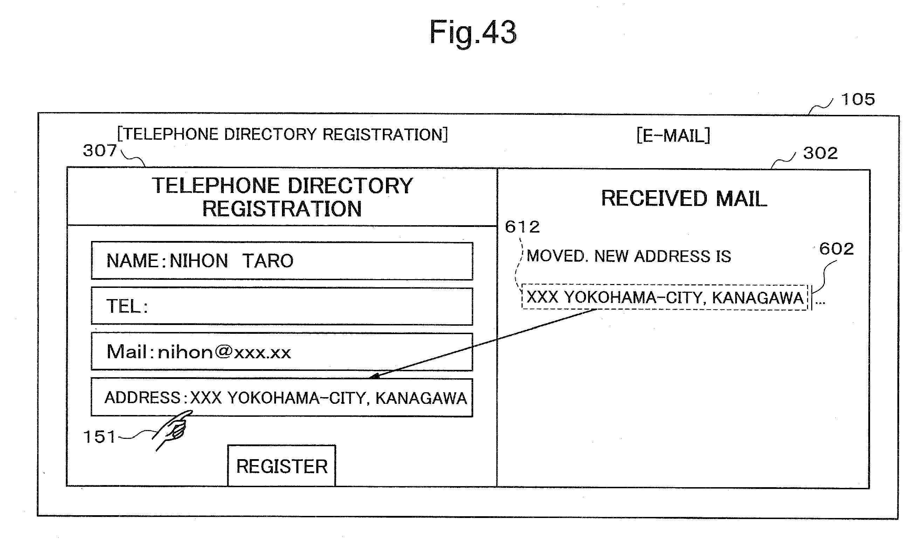

An example of the display 105, when the text 612 designated in the mail processing window 302 by user is pasted on a registration column of the address of the telephone directory registration window 307 is shown in FIG. 43.

According to the fifth embodiment described above, when a telephone directory application program has been started newly during reading a mail in the mail processing window 302, the mail processing window 302 and a telephone directory registration window 307 are displayed in parallel on the display 105 and data coordination of two windows, with 307 and 302 begins. Accordingly, the user can specify the range of the text displayed in the mail processing window 302 freely and pastes to the desired position of the telephone directory registration window 307.

In addition, in this embodiment like the first embodiment, a series of operation of the designation position discriminating unit for each application 133 is also based on processing information which is held on the table stored in the application program storing unit 131.

Meanwhile, when starting two telephone directory application programs, and displaying two telephone directory registration window 307 on the display 105 in parallel, it is possible to move and paste information in the telephone directory data storage unit 134.

In this case, it is rather desirable to provide a registration button only in one side of telephone directory registration window 307 so that the processing will not become complicated.

### [THE SIXTH EXEMPLARY EMBODIMENT]

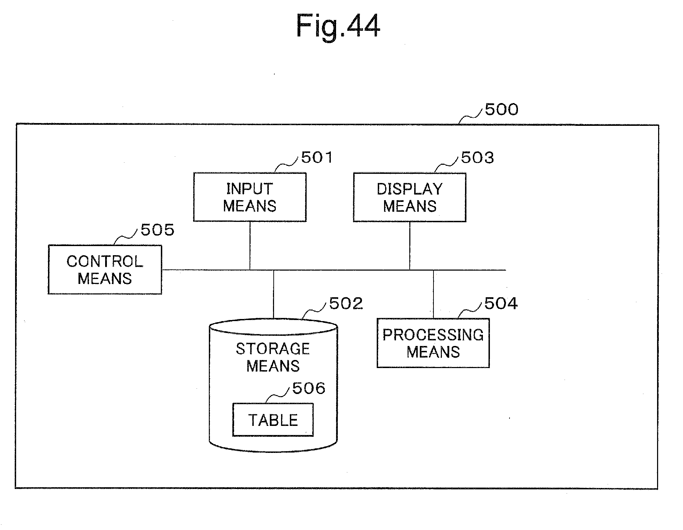

The sixth exemplary embodiment of the present invention will be described. A block diagram of circuit configuration of an information processing apparatus according to this embodiment is shown in FIG. 44.

In FIG. 44, an information processing apparatus 500 according to this embodiment includes an input means 501, a storage means 502 for holding a table 506, a display means 503, a processing means 504 and a control means 505.

The input means 501 accepts input from the user. The storage means 502 holds the table 506 in which processing information correlating to combination of application was registered. The table 506 will be described later. The display means 503 can be, for example, a liquid crystal display and an organic EL display, and display at least two windows relating to application in this embodiment. Therefore, when the input means 501 accepts input for starting the second application while the first window relating to the first application is displayed on the display means 503, the control means 505 displays the first window and the second window relating to the second application on the display means 503. Further, when the input means 501 accepts inputs to the first window and the second window respectively, while the first window and the second window are displayed on the display means 503, the processing means 504 executes processes appropriately based on processing information corresponding to combination of the first application and the second application.

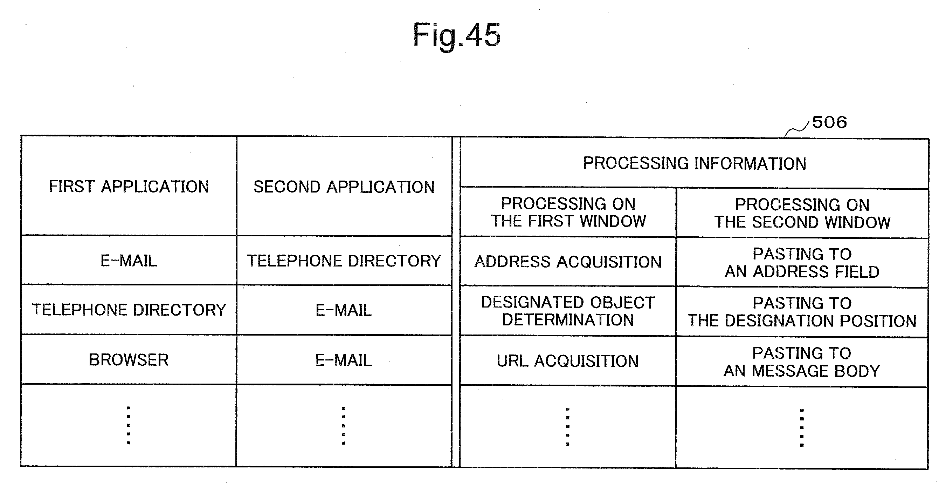

An example of the table 506 is shown in FIG. 45. In FIG. 45, processing information which is correlated to combination of the first application and the second application for defining the operation of the processing means 504 is registered in the table 506. For example, in the case in that the first application is an electronic mail application program and the second application is a telephone directory application program, the acquisition of the address in the first window and pasting the designated object to the address filed are registered as processing information. In this case, the processing means 504 pastes the address which the user designated in the first window into the address field which the user designated in the second window.

In the table 506, in the case in that the first application is a browsing application and the second application is an electronic mail application program, acquisition of URL of contents under browsing in the first window and pasting to the mail main body are registered as processing information. In this case, the processing means 504 acquires the URL of contents under browsing when the user presses down in the first window and pastes the acquired URL in the message main body of the second window when the user presses down in the second window.

According to this embodiment, although processing information correlated with two applications was registered on the table 506, it is not necessarily limited in the above-mentioned. It is also possible for example to register the processing information correlated with three applications in the table. In this case, the content of processing of the designation position discriminating unit for each application 133, when three application programs simultaneously started, can be controlled.

According to the sixth embodiment described above, the information processing apparatus 500 has the storage means 502 holding the table 506 in which processing information was registered correlated to combination of application. And the processing means 504 executes processing to the input from the user based on processing information on the table 506 if a plurality of application programs have been started. Accordingly, an information processing apparatus 500 according to this embodiment can perform appropriate processing to the operation from user depending on the function that is being performed.

Although the embodiments of the present invention have been described in the above, it is not intended that it be limited the embodiments in the above. Various changes may be made without departing from the spirit of the invention.

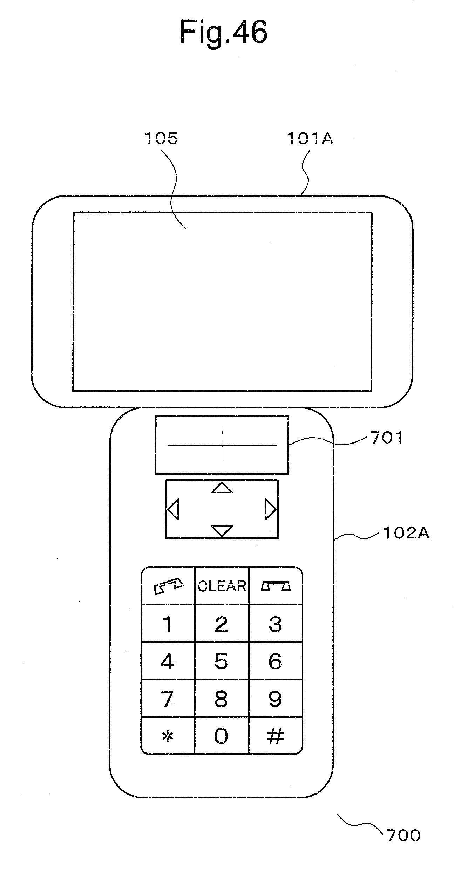

For example, as an information processing apparatus, a PDA, a desk type computer or the like can be used besides the mobile phone. As a touch panel, something with various principles such as a pressure-sensitive type and electrostatic type can also be used. An input device is not limited to the pointing device 110. A drawing of external appearance of an information processing apparatus equipped with other input devices is shown in FIG. 46. In FIG. 46, an information processing apparatus 700 has, as an input device, an electrostatic input pad 701. In the input pad 701, a cursor moves to the traced direction by tracing on the board by a fingertip. In the case the input pad 701 is used, the present invention can be realized. A gesture input can be realized using these input devices or the like instead of a gesture input using a touch panel.

The mobile phones 100,100A, 100B and 100C, and the information processing apparatus 500 and 700 according to this embodiment comprising:
(A) THE APPLICATION MULTI-INVOKING MANAGEMENT UNIT 132 which sets up in parallel the first window for displaying a predetermined displayed content on the one display 105 and the second window for pasting the predetermined from the display contents of the first window by selecting to the selected any one of the position from a plurality of pasting target position by selecting;
(B) THE COORDINATE DETECTING UNIT 125 which detects the designated coordinate position on the display 105 mentioned above;
(C) A CORRELATING MEANS FOR FIRST WINDOW correlating a coordinate which is detected by the coordinate detecting unit 125 in the first window which is set up by the application multi-invoking management unit 132 and the display content selected by the above coordinate according to the kind of windows in advance;
(D) when the coordinate position for selecting a displayed content in the first window by the coordinate detecting unit 125 is detected, A DISPLAY-CONTENTS-FOR-PASTING SELECTING MEANS that selects the display content, which was correlated by a correlating means for first window mentioned above based on the coordinate position, as the pasting object; and
(E) while pasting a displayed content selected by the display-contents-for-pasting selecting means in the second window, at the time when the coordinate detecting unit 125 detects the coordinate position for pasting in the second window, the designation position discriminating unit for each application 133 which pastes the displayed content in the pasting target position based on the coordinate position.

In mobile phones 100, 100A, 100B and 100C or information processing apparatus 500 and 700 according to this embodiment, the application multi-invoking management unit 132, the designation position discriminating unit for each application 133B or the control means 505 displays the first window and the second window on the display 105 or the display means 503 in parallel.

Mobile phones 100, 100A, 100B and 100C or information processing apparatus 500 and 700 according to this embodiment further has the gesture analysis unit 127 which determines whether predetermined input using an input means was performed. When the gesture analysis unit 127 determines that predetermined input was performed, the application multi-invoking management unit 133 processes based on processing information corresponding to combination of the first application and the second application and predetermined input.

Mobile phones 100, 100A, 100B and 100C or information processing apparatus 500 and 700 according to this embodiment includes any of 2 or more of the application functions among an electronic mail application, a telephone directory application, browsing application, motion picture viewing application and mail decoration application.

In mobile phones 100, 100A, 100B and 100C or information processing apparatus 500 and 700 according to this embodiment, when the first application is an electronic mail application and the second application is telephone directory mail application, the application multi-invoking management unit 133 or the processing means 504 pastes the designated object displayed in the first window to the second window.

In the above-mentioned mobile phones 100, 100A, 100B and 100C or information processing apparatus 500 and 700, the application multi-invoking management unit 133 and 133B or the processing means 504 pastes the above-mentioned designated object on the predetermined position of the second window for the input in the arbitrary position of the second window.

In the above-mentioned mobile phones 100, 100A, 100B and 100C or information processing apparatus 500 and 700, a plurality of e-mail addresses are stored in the classified state in the telephone directory data storage unit 134 or a storage means 502, and the application multi-start management units 133, 133B or the processing means 504 selects an e-mail address from the telephone directory data storage unit 134 or the storage means 502 and makes it a designated object according to the input position to the second window.

In the above-mentioned mobile phones 100, 100A, 100B and 100C or information processing apparatus 500 and 700, a plurality of e-mail addresses are stored in the classified state in the telephone directory data storage unit 134 or a storage means 502, and the application multi-start management units 133,133B or the processing means 504 selects an e-mail address from the telephone directory data storage unit 134 or the storage means 502 and makes it a designated object according to the input position to the second window.

In mobile phones 100, 100A, 100B and 100C or information processing apparatus 500 and 700 according to this embodiment, when the first application is browsing application or motion picture viewing application, and the second application is an electronic mail application, the application multi-invoking management unit133 or a processing means 504 acquires identification information of the contents displayed on the first window and pastes the identification information acquired to the second window.

In mobile phones 100, 100A, 100B and 100C or information processing apparatus 500 and 700 according to this embodiment, when the first application is browsing application or motion picture viewing application, and the second application is an electronic mail application, the application multi-invoking management unit 133 or a processing means 504 acquires identification information of contents designated by the operation input unit 129 or an input means 501 based on the second processing information pastes identification information which acquired on the second window

In mobile phones 100, 100A, 100B and 100C or information processing apparatus 500 and 700 according to this embodiment, it is desirable to use a touch panel arranged on the display 105 or the display means 503 as an input part

In mobile phones 100, 100A, 100B and 140C or information processing apparatus 500 and 700 according to this embodiment, it is desirable that the table is capable of updating and new addition of processing information with the input from the operation input unit 129 or the input means 501.

Although appropriate processing is performed at the time of predetermined function execution by technology disclosed by related art 1 to 3, when the information processing apparatus equipped with a plurality of functions processes based on the operation of user, however, an appropriate processing is not performed, at the time of other function execution.

In contrast, mobile phones 100, 100A, 100B and 100C and information processing apparatus 500 and 700 according to this embodiment comprises the application program storing unit 131 or the storage means 502 that holds a table in which processing information was registered correlating to combination of application. And mobile phones 100, 100A, 100B and 100C and information processing apparatus 500 and 700 process according to processing information registered in the table. Accordingly, mobile phones 100, 100A, 100B and 100C and information processing apparatus 500 and 700 according to this embodiment can perform appropriate processing according to the application being under execution based on the operation of user.

Although the present invention has been described with reference to the embodiment above, it is not intended that it be limited thereto. Various changes in the composition and detail may be made within a scope of the present invention that will be understood by the skilled person.

This application insists on priority based on Japanese application, Japanese Patent Application No. 2008-155230 applied on June 13th, 2008 and takes everything of the disclosure here.

### [INDUSTRIAL APPLICABILITY]

An information processing apparatus according to the present invention can be applied to an information processing apparatus such as a PHS, a PDA or a small personal computer which has a plurality or functions and display means for indicating information based on the function.

## Claims

1. Art information processing apparatus having a plurality of application functions, comprising:
an input means to accept input from the user;
a storage means for holding a table to which processing information was registered by correlating to combinations of applications;
a display means which displays at least two windows;
a control means which displays the first window and the second window for the second application to the display means in the case when the input means accepts input for starting the second application while the first window for the first application is displayed on the display means; and
a processing means for processing based on the processing information corresponding to combination of the first application and the second application in the case when the input means accepts input for the first window and the second window respectively while the first window and the second window are displayed on the display means.

2. The information processing apparatus according to claim 1,
wherein the control means displays the first window and the second window on the display means in parallel.

3. The information processing apparatus according to claims 1 or 2, further comprising a gesture analyzing means which determines whether predetermined input was performed with the input means,
wherein the information processing apparatus carries out the process based on the processing information corresponding to the combination of the first application and the second application, and the predetermined input in the case when the gesture
analyzing means determines that the predetermined input was performed.

4. The information processing apparatus according to any one of claims 1 to 3, comprising:
two or more of application functions among an electronic mail application, a telephone directory application, a browsing application, a motion picture viewing application and a mail decoration application.

5. The information processing apparatus according to any one of claims 1 to 4,
wherein the processing means pastes a designated object displayed on the first window into the second window in the case when the first application is the electronic mail application and the second application is the telephone directory mail application.

6. The information processing apparatus according to claim 5,
wherein the processing means pastes the designated object on the predetermined position of the second window for input entered at an arbitrary position of the second window.

7. The information processing apparatus according to claims 5 or 6,
wherein a plurality of electronic mail address is stored in the storage means with classified condition, and
the processing means select the electronic mail address from the storage means according to the input position of the second window and make it the designated object.

8. The information processing apparatus according to any one of claims 1 to 4,
wherein the processing means acquires identification information of contents displayed on the first window and pastes the identification information obtained into the second window in the case when the first application is the browsing application or the motion picture viewing application, and the second application is the electronic mail application.

9. The information processing apparatus according to claim 3,
wherein the processing means acquires identification information of contents designated by the input means based on the second processing information and pastes the identification information obtained into the second window in the case when the first application is the browsing application or the motion picture viewing application, and the second application is the electronic mail application.

10. The information processing apparatus according to any one of claims 1 to 9,
wherein the input means is a touch panel disposed on the display means.

11. The information processing apparatus according to any one of claims 1 to 10,
wherein an update and a new addition of the processing information are performed to the table by the entry from the input means.

12. A information processing method by using a information processing apparatus having a display means and a memory in which processing information was registered by correlating to combinations of applications, comprising:
a step for displaying the first window and the second window for the second application to the display means in the case when accepting input for starting the second application while the first window for the first application is displayed on the display means; and
a step for processing based on the processing information corresponding to combination of the first application and the second application in the case when accepting input for the first window and the second window respectively while the first window and the second window are displayed on the display means.

13. A control program for executed by a computer of an information processing apparatus having a display means and a memory in which processing information was registered by correlating to combinations of applications, comprising:
a procedure for displaying the first window and the second window for the second application to the display means in the case when accepting input for starting the second application while the first window for the first application is displayed on the display means; and
a procedure for processing based on the processing information corresponding to combination of the first application and the second application in the case when accepting input for the first window and the second window respectively while the first window and the second window are displayed on the display means.
